(19)

Europäisches
Patentamt

European
Patent Office

Office européen
des brevets

(11)     **EP 3 932 758 B1**

(12)                    **EUROPEAN PATENT SPECIFICATION**

(45) Date of publication and mention
of the grant of the patent:
**07.08.2024   Bulletin 2024/32**

(21) Application number: **20762351.3**

(22) Date of filing: **25.02.2020**

(51) International Patent Classification (IPC):
***B60T 17/00*** *(2006.01)*      ***B01D 53/26*** *(2006.01)*
***F04B 41/02*** *(2006.01)*

(52) Cooperative Patent Classification (CPC):
**B60T 17/004; F04B 39/16; F04B 41/02;**
B01D 53/261

(86) International application number:
**PCT/JP2020/007468**

(87) International publication number:
**WO 2020/175469 (03.09.2020 Gazette 2020/36)**

(54) **AIR SUPPLY SYSTEM, CONTROL METHOD FOR AIR SUPPLY SYSTEM, AND CONTROL PROGRAM FOR AIR SUPPLY SYSTEM**

LUFTZUFUHRSYSTEM, STEUERUNGSVERFAHREN FÜR LUFTZUFUHRSYSTEM UND STEUERUNGSPROGRAMM FÜR LUFTZUFUHRSYSTEM

SYSTÈME D'ALIMENTATION EN AIR, PROCÉDÉ ET PROGRAMME DE COMMANDE POUR SYSTÈME D'ALIMENTATION EN AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **25.02.2019   JP 2019031992**

(43) Date of publication of application:
**05.01.2022   Bulletin 2022/01**

(73) Proprietor: **Nabtesco Automotive Corporation
Tokyo 102-0093 (JP)**

(72) Inventors:
• **SUGIO, Takuya
Tokyo 102-0093 (JP)**

• **YOKEDA, Kazuya
Tokyo 102-0093 (JP)**

(74) Representative: **Grünecker Patent- und
Rechtsanwälte
PartG mbB
Leopoldstraße 4
80802 München (DE)**

(56) References cited:
**EP-A1- 1 390 244        EP-B1- 1 390 244
JP-A- 2004 526 628      JP-A- 2004 526 628
JP-A- 2010 221 110      JP-A- 2010 221 110**

**Description**

TECHNICAL FIELD

The present invention relates to an air supply system, a control method for an air supply system, and a control program for an air supply system.

BACKGROUND ART

In vehicles such as trucks, buses, and construction machines, air pressure systems including a brake system and a suspension system and the like are controlled utilizing compressed air sent from a compressor. The compressed air contains liquid impurities such as moisture suspended in the atmosphere and oil for lubricating the interior of the compressor. If compressed air containing a large amount of moisture and oil enters into the air pressure system, it will lead to the occurrence of rust and swelling of rubber members or the like, and may be the cause of operational failure. Therefore, a compressed-air drying device that removes impurities such as moisture and oil from the compressed air is provided downstream of the compressor.

The compressed-air drying device is equipped with a filter including a desiccant, and various valves. The compressed-air drying device performs a dehumidification operation that removes moisture and the like from compressed air by passing the compressed air through the filter. Dried compressed air generated by the dehumidification operation is stored in an air tank. Further, a cleaning function of the compressed-air drying device decreases as an amount of dried compressed air passing through the device increases. Therefore, the compressed-air drying device performs a regeneration operation that removes, from the filter, oil and moisture adsorbed on the filter, and discharges the removed oil and moisture as drainage (for example, see Patent Document 1).

PRIOR ART DOCUMENT

Patent Document

Patent Document 1: Japanese Laid-Open Patent Publication No. 2010-201323
Patent Document 2 : Japanese Patent Publication JP 2010 221110 A, which discloses a compressed air supply device for vehicle, comprising an air compressor which is mounted to a vehicle, and which supplies compressed air discharged from said compressor to vehicle loads.

SUMMARY OF THE INVENTION

Problems that the Invention is to Solve

For example, an execution condition, such as the time for which the regeneration operation is executed or the amount of regeneration air passed through the filter, is set to be fixed or determined according to the amount of the compressed air sent from the compressor, for example. However, the inventors have found that the regeneration operation can be excessive or insufficient in any case. If the regeneration time or regeneration air amount is insufficient, the moisture trap capacity of the desiccant is not restored to the original level, and the amount of moisture contained in the air sent from the compressed-air drying device may increase. On the other hand, if the regeneration time or regeneration air amount is excessive, the dried compressed air in the air tank that should be supplied to the pneumatic system or the like may be wasted. The dried compressed air is generated by the compressor driven by a rotational drive source, such as an engine, and therefore, excessive consumption of the dried compressed air leads to an increase of the load on the rotational drive source and a decrease of the fuel consumption of the vehicle.

An objective of the present invention is to reduce a consumed amount of dried compressed air while maintaining proper dehumidification performance by optimizing the amount of air consumed by a regeneration operation.

Means for Solving the Problems

An air supply system that solves the aforementioned problem is defined in the appended independent claim 1.

A control method for an air supply system that solves the aforementioned problem is defined in the appended independent claim 7.

A control program for an air supply system that solves the aforementioned problem is defined in the appended independent claim 8.

According to the configurations described above, the regeneration result stored each time a regeneration operation ends is reflected in the execution condition of the next regeneration operation. In the air drying circuit, the regeneration operation is repeatedly performed under conditions that are different in temperature, humidity or the like. Therefore, if the past regeneration result is reflected in a regeneration operation performed anew, the occurrence of insufficient regeneration of the filter can be reduced, and waste of the dried compressed air can be reduced.

In the air supply system described above, the control device may be configured to: determine whether the regeneration operation is excess or insufficient based on an indicator that indicates a state of wetness of the dried compressed air in the reservoir portion; increase a regeneration air amount, which is an amount of air passing through the filter in the regeneration operation, or a regeneration time, which is a time for which the regeneration operation is executed, when it is determined that the regeneration operation is insufficient; and decrease the regeneration air amount or the regeneration time when it is determined that the regeneration operation is excessive.

According to the configuration described above, when it is determined that the regeneration operation is insufficient, the regeneration air amount or the regeneration time can be increased to restore the dehumidification performance of the filter. When it is determined that the regeneration operation is excessive, the regeneration air amount or regeneration time can be decreased to reduce the consumption of the dried compressed air in the reservoir portion. Further, since the excess or insufficiency of the regeneration operation is determined based on the state of wetness of the dried compressed air in the reservoir portion, the excess or insufficiency of the regeneration operation can be properly determined, even though the determination is indirect.

In the air supply system described above, the control device may be configured to: calculate a degree of excess or insufficiency, which indicates an excess or insufficiency of the regeneration operation; and calculate the regeneration air amount by adding, to a reference air amount, a value obtained by multiplying the degree of excess or insufficiency by a coefficient weighted according to a magnitude of the excess or insufficiency of the regeneration operation.

According to the configuration described above, since the coefficient weighted according to the degree of excess or insufficiency is used, an amount of regeneration air appropriate to the magnitude of the degree of excess or insufficiency can be passed through the filter.

In the air supply system described above, the air drying circuit may include a humidity detection portion between the filter and the reservoir portion, and the control device may be configured to calculate the indicator that indicates the state of wetness of the dried compressed air based on humidity information detected by the humidity detection portion in the regeneration operation.

According to the configuration described above, since the indicator that indicates the state of wetness of the dried compressed air in the reservoir portion is calculated based on the humidity of the dried compressed air flowing back from the reservoir portion to the filter, the state of wetness of the dried compressed air can be properly calculated.

In the air supply system described above, the control device may be configured to: set a regeneration time for which the regeneration operation is executed before starting the regeneration operation; store a remaining time of the regeneration time in the storage portion when the regeneration operation is interrupted; and when starting anew the regeneration operation, acquire the remaining time from the storage portion and reflect the remaining time in the regeneration time of the regeneration operation started anew.

According to the configuration described above, when the regeneration operation is interrupted, the remaining time of the regeneration operation is reflected in the next regeneration operation. Therefore, the performance of the filter can be properly maintained while allowing for an interruption of the regeneration operation.

In the air supply system described above, the control device may be configured so that, when the regeneration operation ends, the control device calculates a corrected remaining time by summing the remaining time of the regeneration operation and a remaining time of a regeneration operation executed before the regeneration operation, and reflects the corrected remaining time in the regeneration time of a subsequent regeneration operation.

According to the configuration described above, when the n-th regeneration operation ends, the remaining time of the (n-1)-th regeneration operation and the remaining time of the n-th regeneration operation are summed and reflected in the (n+1)-th regeneration operation. Since the remaining time of the (n-1)-th regeneration operation is reflected in the regeneration time of the n-th regeneration operation, if the remaining time of the (n-1)-th regeneration operation is cancelled in the n-th regeneration operation, the remaining time is not carried. And if the remaining time of the (n-1)-th regeneration operation is not cancelled, the remaining time is carried. If the n-th regeneration operation is not interrupted, the remaining time of the n-th regeneration operation is not carried to the (n+1)-th regeneration operation. If the n-th regeneration operation is interrupted, the remaining time of the n-th regeneration operation is carried to the (n+1)-th regeneration operation. Therefore, until the remaining time of the past regeneration operations is canceled, the remaining time is carried. Therefore, the dehumidification performance of the filter can be properly maintained.

ADVANTAGEOUS EFFECTS OF INVENTION

According to the present invention a consumed amount of dried compressed air can be reduced while properly maintaining the performance of a desiccant by optimizing an amount of regeneration air consumed by a regeneration operation for the desiccant.

RRIFF DESCRIPTION OF THE DRAWINGS

[Figure 1] Figure 1 is a configuration diagram illustrating a schematic configuration of an air supply system according to a first embodiment.
[Figure 2] Figure 2A to Figure 2F are diagrams illustrating first to sixth operation modes of the air drying circuit according to the embodiment in Figure 1.
[Figure 3] Figure 3 is a schematic diagram showing excess-or-insufficiency coefficient information according to the embodiment in Figure 1.
[Figure 4] Figure 4 is a flowchart illustrating an example of a procedure of supplying compressed air according to the embodiment in Figure 1.
[Figure 5] Figure 5 is a flowchart illustrating an example of a procedure of performing a regeneration operation according to the embodiment in Figure 1.
[Figure 6] Figure 6 is a flowchart illustrating an example of a procedure of determining a regeneration air amount according to the embodiment in Figure 1.
[Figure 7] Figure 7 is a flowchart illustrating an example of a procedure of determining a regeneration time according to a second embodiment.
[Figure 8] Figure 8 is a flowchart illustrating an example of a procedure of updating a shortage time according to the embodiment in Figure 7.

MODES FOR CARRYING OUT THE INVENTION

(First embodiment)

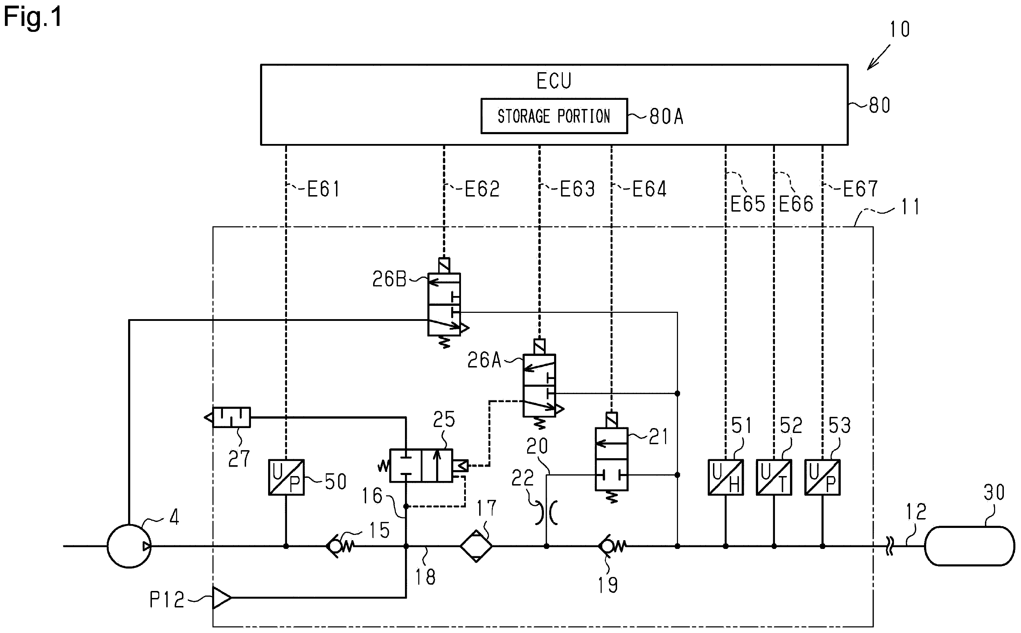

With reference to Figure 1 to Figure 6, an air supply system according to a first embodiment will be described. The air supply system is installed in a vehicle such as a truck, a bus, or a construction machine. Dried compressed air generated by the air supply system is used for a pneumatic system of a vehicle, such as a brake system (brake device) or a suspension system (suspension device).

<Air supply system 10>

An air supply system 10 will now be described with reference to Figure 1. The air supply system 10 includes a compressor 4, an air drying circuit 11, and an ECU 80 (Electronic Control Unit) that serves as a control device.
The ECU 80 is connected to the air drying circuit 11 through a plurality of wirings E61 to E67. The ECU 80 includes an arithmetic portion, a communication interface portion, a volatile storage portion, and a nonvolatile storage portion. The arithmetic portion is a computer processor, and is configured to control the air drying circuit 11 according to an air supply program stored in the nonvolatile storage portion (storage medium). At least a part of the processing to be executed by the arithmetic portion may be realized by a circuit such as an ASIC. The air supply program may be executed by one computer processor, or may be executed by a plurality of computer processors. The ECU 80 also includes a storage portion 80A that stores information for determining the frequency of execution of each operation of the air drying circuit 11. The storage portion 80A is a nonvolatile storage portion or a volatile storage portion, and may be the same as or different from the storage portion in which the aforementioned control program is stored.
The ECU 80 is connected through an in-vehicle network such as a CAN (Controller Area Network) to other ECUs (not illustrated) mounted in the vehicle, for example, an engine ECU and a brake ECU. The ECU 80 acquires information indicating a vehicle state from those ECUs. The information indicating the vehicle state includes, for example, information indicating whether the ignition switch is off, the vehicle speed, and information pertaining to driving of the engine.
The state of the compressor 4 is switched, based on an instruction from the ECU 80, between an operation state (load operation) in which the compressor 4 compresses air and sends the compressed air and a non-operation state (idling operation) in which the compressor 4 does not compress air. The compressor 4 is operated by motive power transmitted from a rotary drive source such as an engine.

The air drying circuit 11 is a so-called "air dryer". The air drying circuit 11 is connected to the ECU 80, and moisture and the like included in compressed air sent from the compressor 4 during a load operation is removed from the compressed air by the air drying circuit 11. The air drying circuit 11 supplies the compressed air after drying (hereinafter, referred to as "dried compressed air") to a supply circuit 12. The dried compressed air supplied to the supply circuit 12 is stored in an air tank 30.

The dried compressed air stored in the air tank 30 is supplied to a pneumatic system such as a brake system installed in the vehicle. For example, in a case where the frequency at which the brakes are operated is high, such as when the vehicle travels on a downward slope or through an urban area, a consumed amount of the dried compressed air stored in the air tank 30 is large. In contrast, in a case where the frequency at which the brakes are operated is low, the consumed amount of the dried compressed air stored in the air tank 30 is small.

The air drying circuit 11 has a maintenance port P12. The maintenance port P12 is a port that is used for supplying air to the air drying circuit 11 when performing maintenance.

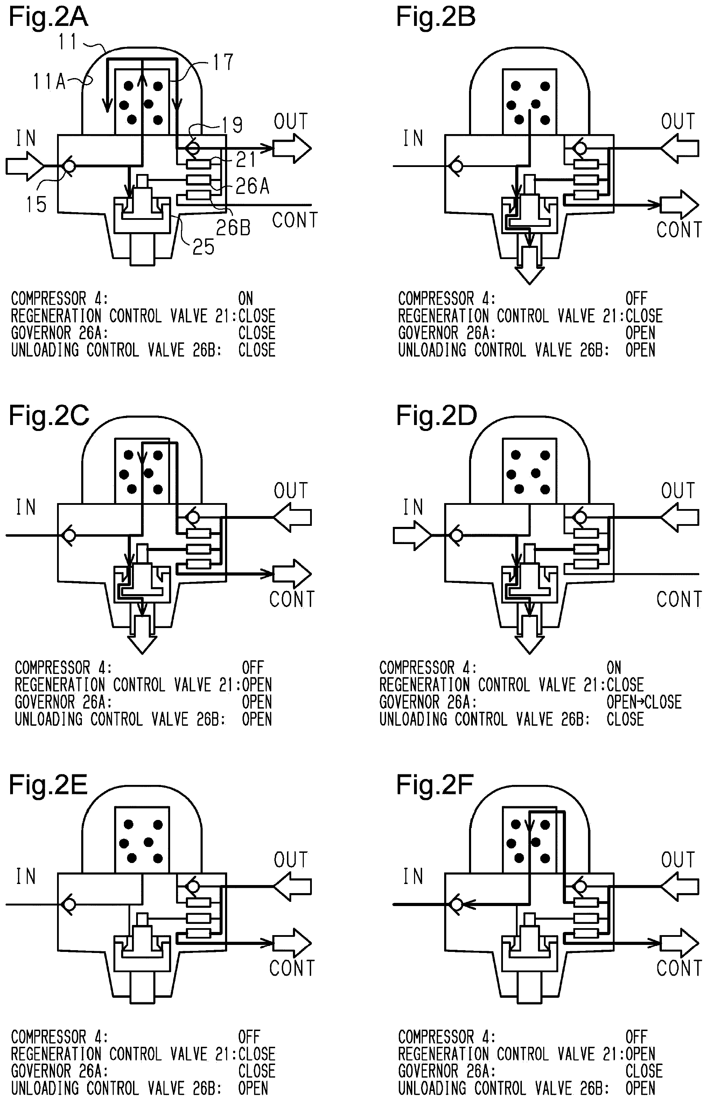

The air drying circuit 11 includes a filter 17 arranged inside a case 11A (see Figure 2A) or the like. The filter 17 is provided partway along an air supply passage 18 which connects the compressor 4 and the supply circuit 12. The filter 17 includes a desiccant. Further, in addition to the desiccant, the filter 17 include an oil trap portion which traps oil. The oil trap portion can be a material of any kind that can trap oil while allowing air to pass therethrough, such as a foam such as urethane foam, a metal material having a large number of air holes, or a glass fiber filter.

The filter 17 causes compressed air sent from the compressor 4 to pass through the desiccant to thereby remove moisture contained in the compressed air from the compressed air and thus dry the compressed air. Further, the oil trap portion traps oil contained in the compressed air to thereby clean the compressed air. The compressed air that passed through the filter 17 is supplied to the supply circuit 12 via a downstream check valve 19. When the filter 17 side is taken as upstream and the supply circuit 12 side is taken as downstream, the downstream check valve 19 only permits a flow of air from upstream to downstream. Note that, the downstream check valve 19 has a predetermined valve opening pressure (sealing pressure), and therefore when compressed air flows, the upstream pressure is higher than the downstream pressure by an amount corresponding to the valve opening pressure.

Further, on the downstream side of the filter 17, a bypass channel 20 as a bypass for bypassing the downstream check valve 19 is provided in parallel with the downstream check valve 19. A regeneration control valve 21 is provided in the bypass channel 20.

The regeneration control valve 21 is an electromagnetic valve that is controlled by the ECU 80. The ECU 80 switches operations of the regeneration control valve 21 by controlling to switch the power of the regeneration control valve 21 on and off (driving/non-driving) via the wiring E64. The regeneration control valve 21 is closed in a state in which the power is off and thereby seals the bypass channel 20, and is opened in a state in which the power is on and thereby opens the bypass channel 20. The ECU 80 receives, for example, the value of the air pressure inside the air tank 30, and actuates the regeneration control valve 21 when the value of the air pressure exceeds a predetermined range.

In the bypass channel 20, an orifice 22 is provided between the regeneration control valve 21 and the filter 17. When the regeneration control valve 21 is energized, dried compressed air on the supply circuit 12 side is sent to the filter 17 via the bypass channel 20 in a state in which the flow rate is regulated by the orifice 22. The dried compressed air sent to the filter 17 flows back from downstream of the filter 17 toward upstream thereof so as to pass through the filter 17. Such a process is an operation that regenerates the filter 17 and is referred to as a "regeneration operation" of the air drying circuit 11. At such time, because the dried compressed air sent to the filter 17 is dried and cleaned air that has passed through the filter 17 and the like from the air supply passage 18 and supplied to the supply circuit 12, the dried compressed air can remove moisture and oil trapped in the filter 17 from the filter 17. In normal control, the ECU 80 opens the regeneration control valve 21 when the pressure inside the air tank 30 reaches an upper limit value (cut-out pressure). On the other hand, when the pressure inside the air tank 30 reaches a lower limit value (cut-in pressure), the ECU 80 closes the regeneration control valve 21 that has been opened.

A branch passage 16 branches from a section between the compressor 4 and the filter 17. A drainage discharge valve 25 is provided in the branch passage 16, and a drainage discharge port 27 is connected to the end of the branch passage 16.

Drainage that is a fluid containing moisture and oil removed from the filter 17 is sent together with compressed air to the drainage discharge valve 25. The drainage discharge valve 25 is a pneumatically driven valve that is driven by air pressure, and is provided between the filter 17 and the drainage discharge port 27, in the branch passage 16. The drainage discharge valve 25 is a two-port, two-position valve that changes positions between a closed position and an open position. When in the open position, the drainage discharge valve 25 sends drainage to the drainage discharge port 27. The drainage discharged from the drainage discharge port 27 may be collected by an oil separator (not shown). Note that, the drainage corresponds to a fluid that passes through the filter 17 in the reverse direction.

The drainage discharge valve 25 is controlled by a governor 26A. The governor 26A is an electromagnetic valve that is controlled by the ECU 80. The ECU 80 switches operations of the governor 26A by controlling to switch the power of the governor 26A on and off (driving/non-driving) via the wiring E63. When the power of the governor 26A is switched on, the governor 26A switches to an input position in which the governor 26A inputs an air pressure signal to the drainage discharge valve 25 to open the drainage discharge valve 25. Further, when the power of the governor 26A is switched off, the governor 26A switches to an open position in which the governor 26A does not input an air pressure signal to the drainage discharge valve 25 and opens a port of the drainage discharge valve 25 to the atmospheric pressure to cause the drainage discharge valve 25 to close.

In a state in which an air pressure signal is not being input from the governor 26A, the drainage discharge valve 25 is maintained in the closed position in which the branch passage 16 is closed, and upon an air pressure signal being input from the governor 26A, the drainage discharge valve 25 switches to the open position in which the branch passage 16 is opened. Further, if the pressure of an input port connected to the compressor 4 in the drainage discharge valve 25 exceeds an upper limit value, the drainage discharge valve 25 is forcedly switched to the open position.

An upstream check valve 15 is provided between the compressor 4 and the filter 17 and between the compressor 4 and the branch passage 16. When the compressor 4 side is referred to as "upstream" and the filter 17 side is referred to as "downstream", the upstream check valve 15 permits only the flow of air from the upstream side toward the downstream side. The upstream check valve 15 has a predetermined valve opening pressure (sealing pressure). Therefore, when compressed air flows, the upstream pressure becomes higher than the downstream pressure by an amount corresponding to the valve opening pressure. Note that, upstream of the upstream check valve 15, a reed valve is provided in the outlet of the compressor 4. The branch passage 16 and the filter 17 are provided downstream of the upstream check valve 15.

The compressor 4 is controlled by an unloading control valve 26B. The unloading control valve 26B is an electromagnetic valve that is controlled by the ECU 80. The ECU 80 switches operations of the unloading control valve 26B by controlling to switch the power of the unloading control valve 26B on and off (driving/non-driving) via the wiring E62. When the power of the unloading control valve 26B is switched off, the unloading control valve 26B switches to an open position to open a channel between the unloading control valve 26B and the compressor 4 to the atmosphere. Further, when the power of the unloading control valve 26B is switched on, the unloading control valve 26B switches to a supply position and sends an air pressure signal composed of compressed air to the compressor 4.

A state of the compressor 4 switches to a non-operation state (idling operation) upon the air pressure signal being input from the unloading control valve 26B. For example, when the pressure in the air tank 30 has reached the cut-out pressure, a supply of dried compressed air is not required. When the pressure on the supply circuit 12 side reaches the cut-out pressure and the ECU 80 switches on the power of the unloading control valve 26B (drives the unloading control valve 26B), the unloading control valve 26B switches to the supply position. By this means, an air pressure signal is supplied to the compressor 4 from the unloading control valve 26B, and the state of the compressor 4 switches to a non-operation state.

A pressure sensor 50 is provided between the compressor 4 and the upstream check valve 15. The pressure sensor 50 is connected to the air supply passage 18, and measures the air pressure in the air supply passage 18 and transmits the measured result to the ECU 80 through the wiring E61.

A humidity sensor 51 and a temperature sensor 52 are provided between the downstream check valve 19 and the supply circuit 12. The humidity sensor 51 may detect absolute humidity or relative humidity. The humidity sensor 51 and the temperature sensor 52 measure the humidity and the temperature of the compressed air on the downstream side of the filter 17, and output the measurement results to the ECU 80 through the wiring E65 and E66, respectively. The ECU 80 determines the state of wetness of the dried compressed air based on the humidity and the temperature input from the humidity sensor 51 and the temperature sensor 52.

Further, a pressure sensor 53 is provided between the downstream check valve 19 and the supply circuit 12. The pressure sensor 53 is provided to be able to detect the air pressure in the air tank 30, and outputs the detected pressure value to the ECU 80 through the wiring E67. The pressure between the downstream check valve 19 and the supply circuit 12 is the same as the pressure in the air tank 30, and the detection result of the pressure sensor 53 can be used as the value of the pressure in the air tank 30. Note that, the pressure sensor 53 may be provided in the supply circuit 12 or may be provided in the air tank 30.

<Description of operations of air drying circuit 11>

As illustrated in Figures 2A to 2F, the air drying circuit 11 has a plurality of operation modes which include at least a first operation mode to a sixth operation mode.

(First operation mode)

As illustrated in Figure 2A, the first operation mode is a mode in which a normal dehumidification operation (loading operation) is performed. In the first operation mode, the regeneration control valve 21 and the unloading control valve 26B are each closed (described as "CLOSE" in the drawing), and the governor 26A is set in the open position in which no air pressure signal is input to the compressor 4 (described as "CLOSE" in the drawing). At this time, power is not supplied to the regeneration control valve 21, the governor 26A, and the unloading control valve 26B. Further, the governor 26A and the unloading control valve 26B open ports of the compressor 4 and the drainage discharge valve 25, which are connected to the downstream side of the governor 26A and the unloading control valve 26B, to the atmosphere, respectively. In the first operation mode, when compressed air is being supplied from the compressor 4 (described as "ON" in the drawing), moisture and the like is removed at the filter 17, and the compressed air is supplied to the supply circuit 12.

(Second operation mode)

As illustrated in Figure 2B, the second operation mode is a mode for performing a purge operation that causes dried compressed air inside the air drying circuit 11 to pass through the filter 17 to clear the filter 17. In the second operation mode, the regeneration control valve 21 is closed, the unloading control valve 26B is set in the supply position (described as "OPEN" in the drawing), and the governor 26A is set in the input position (described as "OPEN" in the drawing). At such time, power is supplied to each of the governor 26A and the unloading control valve 26B, and the ports of the compressor 4 and the drainage discharge valve 25, which are connected to the downstream side of the governor 26A and the unloading control valve 26B, are each connected to the upstream side (supply circuit 12 side). By this means, the compressor 4 switches to a non-operation state (described as "OFF" in the drawing), and the drainage discharge valve 25 is opened. As a result, dried compressed air present between the downstream check valve 19 and the filter 17 flows (flows back) through the filter 17 in the reverse direction to the direction of the flow of air in the first operation mode (dehumidification mode), and moisture and the like trapped by the filter 17 is discharged from the drainage discharge port 27 as drainage. Further, the air pressure of the filter 17 and the air supply passage 18 is released to the atmospheric pressure.

(Third operation mode)

As illustrated in Figure 2C, the third operation mode is a mode for performing a regeneration operation that regenerates the filter 17. In the third operation mode, the regeneration control valve 21 is opened, the governor 26A is set in the input position, and the unloading control valve 26B is set in the supply position (each described as "OPEN" in the drawing). At this time, in addition to the governor 26A and the unloading control valve 26B, power is also supplied to the regeneration control valve 21. In the third operation mode, the compressor 4 is placed in a non-operation state, and dried compressed air in the supply circuit 12 or stored in the air tank 30 is caused to flow back through the filter 17, and is discharged from the drainage discharge port 27. By this means, moisture and the like trapped in the filter 17 is removed. Whilst the second operation mode and the third operation mode are each a mode that clears the filter 17, the third operation mode differs from the second operation mode at least in the respect that the regeneration control valve 21 is opened. By this means, in the third operation mode, dried compressed air inside the air tank 30 can be caused to pass through the filter 17 via the supply circuit 12 and the bypass channel 20. Therefore, an effect of clearing the filter 17 is greater than in the second operation mode. Further, in the third operation mode also, the air pressure of the filter 17 and the air supply passage 18 is released to the atmospheric pressure.

(Fourth operation mode)

As illustrated in Figure 2D, the fourth operation mode is a mode in which an oil cut operation is performed. In the fourth operation mode, air containing an excessive amount of oil sent from the compressor 4 is discharged from the drainage discharge port 27 without passing through the filter 17 while the compressor 4 is operating. When the compressor 4 is in the non-operation state, oil may store in the compression chamber of the compressor 4. If the state of the compressor 4 is switched to the operation state in a state in which oil has stored inside the compression chamber, the amount of oil contained in the compressed air sent from the compression chamber increases. If oil adheres to the desiccant, the dehumidification performance of the desiccant deteriorates. To avoid this, the oil cut operation is executed to discharge the compressed air containing an excessive amount of oil. In the fourth operation mode, the regeneration control valve 21 is closed, the unloading control valve 26B is set in the open position (described as "CLOSE" in the drawing), and the governor 26A is driven for a time period and then set in the open position (described as "CLOSE" in the drawing). In this way, even if compressed air containing a relatively large amount of oil is sent from the compressor 4, the compressed air can be prevented from passing through the filter 17 and discharged from the drainage discharge port 27. Therefore, a deterioration of the dehumidification performance of the filter 17 immediately after the compressor 4 is switched from the non-operation state to the operation state can be prevented. The oil cut operation can also be performed when a rotational speed of the engine increases in the operation state and when the oil content from the compressor 4 increases when there is a high load on the engine or the like.

(Fifth operation mode)

As illustrated in Figure 2E, the fifth operation mode is a mode for performing a compressor stop operation without purging. In the fifth operation mode, the regeneration control valve 21 is closed, the governor 26A is set in the open position (described as "CLOSE" in the drawing), and the unloading control valve 26B is set in the supply position (described as "OPEN" in the drawing). In the fifth operation mode, when the compressor 4 is in a non-operation state, the air pressure is maintained by not allowing compressed air or dried compressed air remaining in the air supply passage 18 or the desiccant of the filter 17 to be discharged from the drainage discharge port 27.

(Sixth operation mode)

As illustrated in Figure 2F, the sixth operation mode is a mode in which an assist operation is performed for a pressurization process. In the sixth operation mode, the regeneration control valve 21 is opened, the unloading control valve 26B is set in the supply position (described as "OPEN" in the drawing), and the governor 26A is set in the open position (described as "CLOSE" in the drawing). In the sixth operation mode, when the compressor 4 is in a non-operation state, by supplying compressed air in the supply circuit 12 (causing the compressed air to flow back) to the air supply passage 18 and into the desiccant of the filter 17, the pressure of the air supply passage 18 and the filter 17 is made higher than the atmospheric pressure to thereby maintain the back pressure (air pressure) of the upstream check valve 15 at a pressure that is higher than the atmospheric pressure.

(Setting of execution condition)

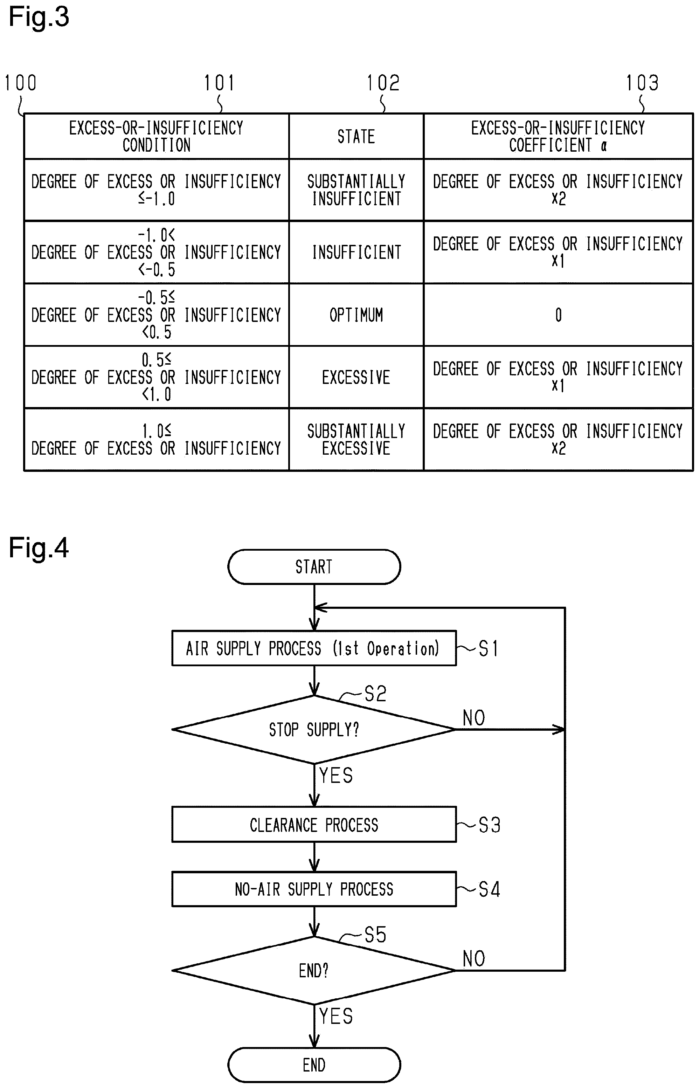

Next, with reference to Figure 3, a method of determining the amount of regeneration air consumed by the regeneration operation (third operation mode) will be described. A regeneration air amount Am is calculated according to the following equation (1). The regeneration air amount Am may be calculated in terms of volume or mass. The right side (or left side) of this equation (1) may include various coefficients for conversion of units.

$$\text{Regeneration air amount } Am = \text{standard regeneration air amount } Am1 - \text{corrected unit air amount } Am2 \times \text{excess-or-insufficienty coefficient } \alpha \tag{1}$$

The standard regeneration air amount Am1 (standard regeneration capacity) is an air amount basically determined by the specifications (specs) of the air drying circuit 11, but can vary with the temperature of the dried compressed air or the upper limit value of the pressure in the air tank 30, for example. The corrected unit air amount Am2 (reference regeneration capacity) is a unit amount for correction of the regeneration air amount. The corrected unit air amount Am2 can also vary with the temperature of the dried compressed air or the upper limit value of the pressure in the air tank 30, for example.

The excess-or-insufficiency coefficient $\alpha$ (regeneration excess-or-insufficiency coefficient) is a coefficient set based on a change (trend) of the state of wetness of the dried compressed air stored in the air tank 30. The excess or insufficiency of the regeneration operation can be determined based on the amount of moisture trapped by the filter 17. However, the amount of moisture contained in the compressed air varies with temperature or humidity, and therefore, it is difficult to estimate the amount of moisture trapped by the filter 17 based only on the execution time of the regeneration operation or the amount of air passing through the filter during the regeneration operation. Further, it is also difficult to directly measure the amount of moisture trapped by the filter 17. If the excess or insufficiency of the regeneration operation is determined based on the state of wetness of the dried compressed air in the reservoir portion as in this embodiment, the excess or insufficiency of the regeneration operation can be appropriately determined, even though the determination is indirect.

The change (trend) of the state of wetness on which the excess-or-insufficiency coefficient $\alpha$ is based is determined with regard to a time period after the previous regeneration operation was performed and before the current regeneration operation is performed. Although an indicator for determining the state of wetness is not particularly limited, in this embodiment, the state of wetness is determined by calculating the amount of moisture contained in the dried compressed air in the air tank 30 (hereinafter, referred to as a contained moisture amount). When the indicator indicating the state of wetness of the dried compressed air stored in the air tank 30 is large, or in other words, the contained moisture amount is high after the previous regeneration operation, it is determined that the amount of moisture trapped by the filter 17 is increasing. Therefore, in the equation (1) described above, the excess-or-insufficiency coefficient $\alpha$ is set to be a negative value smaller than "0" to increase the regeneration air amount.

On the other hand, when the indicator indicating the state of wetness of the dried compressed air stored in the air tank 30 is low, or in other words, the contained moisture amount is small, it is determined that the amount of moisture trapped by the filter 17 is decreasing. Therefore, the excess-or-insufficiency coefficient $\alpha$ is set to be a positive value greater than "0" to decrease the regeneration air amount. When it is determined that the state of wetness of the dried compressed air is appropriate, the excess-or-insufficiency coefficient is set to be "0", and the standard regeneration air amount Am1 is not corrected.

As illustrated in Figure 3, the ECU 80 stores excess-or-insufficiency coefficient information 100 in a nonvolatile storage portion. The excess-or-insufficiency coefficient information 100 includes an excess-or-insufficiency condition 101 and an excess-or-insufficiency coefficient 103. A state 102 indicates a state indicated by the excess-or-insufficiency condition 101 for convenience and can be omitted. As the excess-or-insufficiency conditions 101, ranges of the degree of excess or insufficiency of regeneration are set. The degree of excess or insufficiency of regeneration is an indicator that indicates whether the degree of saturation of moisture contained in the dried compressed air in the air tank 30 is increasing or decreasing.

The excess-or-insufficiency coefficient 103 is the degree of excess or insufficiency of regeneration multiplied by a weighting factor. Each excess-or-insufficiency coefficient 103 is associated with an excess-or-insufficiency condition 101, which is a range of the degree of excess or insufficiency of regeneration. Although the weighting factors are positive integer in Figure 3, the weighting factor need not be a positive integer.

In the excess-or-insufficiency coefficient information 100, when the regeneration air amount is substantially insufficient, that is, when the contained moisture amount is large, the degree of excess or insufficiency of regeneration is a negative value and large in absolute value, such as a value equal to or smaller than "-1 ". In that case, the weighting factor is also set to be a relatively large value, such as "2". When the regeneration air amount is insufficient although it cannot be said to be "substantially insufficient", the degree of excess or insufficiency of regeneration falls within a range greater than "-1" and smaller than "-0.5", for example, and is smaller in absolute value than when the degree of excess or insufficiency of regeneration is "substantially insufficient". The weighting factor is also set to be a smaller value, such as "1", than when the degree of excess or insufficiency of regeneration is "substantially insufficient".

When the regeneration air amount is substantially excessive, that is, when the contained moisture amount is small, the degree of excess or insufficiency of regeneration is a positive value and large in absolute value, such as a value equal to or greater than "1". In that case, the weighting factor is also set to be a relatively large value, such as "2". When the regeneration air amount is excessive although it cannot be said to be "substantially excessive", the degree of excess or insufficiency of regeneration falls within a range equal to or greater than "0.5" and smaller than "1", for example, and is smaller in absolute value than when the degree of excess or insufficiency of regeneration is "substantially excessive". The weighting factor is also set to be a smaller value, such as "1", than when the degree of excess or insufficiency of regeneration is "substantially insufficient".

When the degree of excess or insufficiency of regeneration falls within a range equal to or greater than "-0.5" and smaller than "0.5", the excess-or-insufficiency coefficient is set to be "0".

Next, the degree of excess or insufficiency of regeneration will be described. In this embodiment, the degree of excess or insufficiency of regeneration is calculated according to the following equation (2). A tank air moisture saturation degree S indicates a moisture saturation degree contained in the dried compressed air in the air tank 30. The tank air moisture saturation degree S is stored in a nonvolatile storage portion or a volatile storage portion each time a regeneration operation ends. The tank air moisture saturation degree S(n-1) is a value calculated after the previous ((n-1)-th) regeneration operation ended, and the tank air moisture saturation degree S(n) is a value calculated when the current (n-th) regeneration operation ended. The right side (or left side) of this equation (2) may include various coefficients for conversion of units.

$$\text{Degree of excess or insufficiency of regeneration } D = \text{tank air moisture saturation degree } S(n\text{-}1) - \text{tank air moisture saturation degree } S(n) \tag{2}$$

The tank air moisture saturation degree S is calculated according to the following equation (3). A tank contained moisture amount Mtk is a calculated value of the amount of moisture contained in the dried compressed air in the air tank 30, and a moisture change amount $\Delta M$ is a value obtained by subtracting the amount of moisture contained in the amount of air sent from the air tank 30 from the amount of moisture contained in the amount of air sent from the air drying circuit 11. A tank maximum moisture amount Mmax is the maximum amount of moisture contained in the dried compressed air in the air tank 30 (tank air containable moisture amount). The right side (or left side) of this equation (3) may include various coefficients for conversion of units.

$$\text{Tank air moisture saturation degree } S = (\text{tank contained moisture amount } Mtk + \text{moisture charnge amount} \Delta M)/(\text{tank maximum moisture amount } Mmax) \tag{3}$$

The tank contained moisture amount Mtk can be calculated from the humidity detected by the humidity sensor 51 and the temperature detected by the temperature sensor 52 during the regeneration operation, for example. The amount of moisture contained in the amount of air sent from the air drying circuit 11 can be calculated from the humidity detected by the humidity sensor 51 and the temperature detected by the temperature sensor 52 during the dehumidification operation. The amount of moisture contained in the amount of air sent from the air tank 30 can be calculated from the tank contained moisture amount Mtk and a consumed air amount, which is the amount of air supplied from the air tank 30 to each pneumatic system, for example.

(Control of air drying circuit)

Next, with reference to Figure 4 to Figure 6, a procedure in which the ECU 80 controls the air drying circuit 11 will be described.

With reference to Figure 4, a general control procedure will be described. The ECU 80 performs an air supply process of supplying compressed air output from the compressor 4 to the supply circuit 12 (step S1). For example, the air supply process is started on a predetermined condition, such as when the engine is driven. Alternatively, the air supply process may be started when the pressure in the air tank 30 has reached a predetermined pressure, such as a cut-in pressure, which is a lower limit value, for example. In the air supply process, the air drying circuit 11 is in the first operation mode and is executing the dehumidification operation.

When the air supply process is started, the ECU 80 determines whether to stop the supply of air or not (step S2). More specifically, the ECU 680 acquires the pressure in the air tank 30 detected by the pressure sensor 53, and determines whether or not the pressure has reached the cut-out pressure. If the ECU 80 determines that the pressure in the air tank 30 has not reached the cut-out pressure (step S2: NO), the ECU 80 returns the processing to the air supply process (step S1).

If the ECU 80 determines that the pressure in the air tank 30 has reached the cut-out pressure (step S2: YES), the ECU 80 ends the air supply process, brings the compressor 4 into the non-operation state, and executes a clearance process (step S3). In the clearance process, the ECU 80 determines whether or not the regeneration operation and the purge operation are required based on a previously set condition, and the ECU 80 executes the regeneration operation when it is determined that the regeneration operation is required, and executes the purge operation when it is determined that the purge operation is required.

When the clearance process (step S3) ends, the ECU 80 performs a no-air supply process (step S4). In the no-air supply process, when the compressor 4 is in the non-operation state, pressure adjustment of the air drying circuit 11, such as adjustment of the back pressure of the upstream check valve 15, is performed. For example, in the no-air supply process, adjustment of the air pressure of the air drying circuit 11 is performed by executing at least one of the second operation mode, the fifth operation mode, and the sixth operation mode one or more times. When the pressure adjustment ends, the ECU 80 determines whether to end the air supply or not based on the state of the vehicle (step S5). The end of the air supply is determined based on the state of the vehicle, such as a stop of the engine of the vehicle.

If the ECU 80 determines not to end the air supply (step S5: NO), the ECU 80 returns the processing to step S1 and executes the air supply process (step S1) and the subsequent processing. On the other hand, if the ECU 80 determines to end the air supply (step S5: YES), the ECU 80 stops the supply of air.

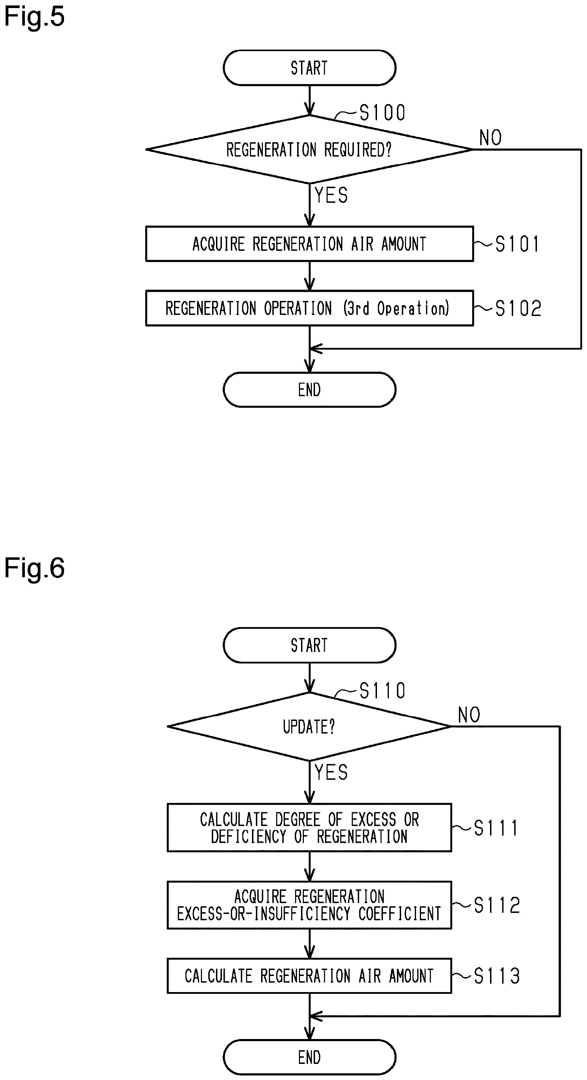

Next, with reference to Figure 5, a procedure of controlling the regeneration operation will be described. The ECU 80 determines whether the regeneration operation is required or not based on a previously determined condition (step S100). For example, the ECU 80 determines that the regeneration operation is required when the tank contained moisture amount Mtk is equal to or greater than a predetermined value, and determines that the regeneration operation is not required when the tank contained moisture amount Mtk is smaller than the predetermined value.

When the ECU 80 determines that the regeneration operation is not required (step S100: NO), the ECU 80 ends the processing. On the other hand, when the ECU 80 determines that the regeneration operation is required (step S100: YES), the ECU 80 acquires a determined regeneration air amount (step S101). The ECU 80 then switches the air drying circuit 11 to the third operation mode based on the acquired regeneration air amount, and executes the regeneration operation (step S102). Here, a change of the value of the pressure detected by the pressure sensor 53 may be converted into an amount of air consumed by the regeneration operation, and the regeneration operation may be ended when the converted air amount has reached the regeneration air amount. Alternatively, the regeneration operation may be performed by switching the air drying circuit 11 to the third operation mode and keeping the air drying circuit 11 in the third operation mode for a regeneration time corresponding to the regeneration air amount. The regeneration time is calculated by using a map that associates the regeneration air amount and the regeneration time with each other or by using a conversion formula on an assumption that the amount of air passing through the filter 17 in a unit time during the regeneration is constant. When the regeneration operation ends, the clearance process (step S3) ends, and the processing proceeds to the next step.

Next, with reference to Figure 6, a processing of determining the regeneration air amount will be described. The ECU 80 defines a period from the time of end of the regeneration operation to the time of start of the subsequent regeneration operation as one cycle. The ECU 80 updates the regeneration air amount at a predetermined timing in one cycle. The update timing of the regeneration air amount is not particularly limited. For example, update of the regeneration air amount may be performed at the time of start of one cycle, at the time of end of one cycle, between the time of start and the time of end of one cycle, or every predetermined time period, such as every time period shorter than an average duration of one cycle.

The ECU 80 determines whether to update the regeneration air amount or not (step S110). For example, the ECU 80 determines whether a predetermined timing in a new cycle has been reached or not. When the ECU 80 determines that the predetermined timing has not been reached (step S111: NO), the ECU 80 ends the processing.

When the ECU 80 determines to update the regeneration air amount (step S110: YES), the ECU 80 calculates the degree of excess or insufficiency of regeneration (step S111). As described above, the degree of excess or insufficiency of regeneration is calculated based on a change of the tank air moisture saturation degree. The tank air moisture saturation degree is calculated from the tank contained moisture amount $Mtk$, the moisture change amount $\Delta M$, and the tank maximum moisture amount $Mmax$.

Upon calculating the degree of excess or insufficiency of regeneration, the ECU 80 acquires the excess-or-insufficiency coefficient by referring to the excess-or-insufficiency coefficient information 100 (step S112). The ECU 80 then calculates the regeneration air amount based on the acquired excess-or-insufficiency coefficient, the standard regeneration air amount, and the corrected unit air amount (step S113). For example, when the degree of excess or insufficiency of regeneration corresponds to the state of "substantially insufficient" or "insufficient", the regeneration air amount calculated in step S113 is greater than the standard regeneration air amount, and a relatively large amount of dried compressed air passes through the filter 17. When the degree of excess or insufficiency of regeneration corresponds to the state of "substantially excessive" or "excessive", the regeneration air amount calculated in step S113 is smaller than the standard regeneration air amount, and a relatively small amount of dried compressed air passes through the filter 17. Further, when the degree of excess or insufficiency of regeneration corresponds to the state of "optimum", the regeneration air amount calculated in step S113 is equal to the standard regeneration air amount, and an amount of dried compressed air smaller than the air amount in the case where the degree of excess or insufficiency of regeneration is insufficient and greater than the air amount in the case where the degree of excess or insufficiency of regeneration is excessive passes through the filter 17.

As described above, according to the first embodiment, the following advantageous effects are achieved.

(1) The tank air moisture saturation degree $S$, which is a regeneration result stored each time a regeneration operation ends, is reflected in the regeneration air amount of the next regeneration operation. The regeneration operation is repeatedly performed in the air drying circuit 11 under situations that are different in temperature, humidity or the like. Therefore, if the past regeneration result is reflected in a subsequent regeneration operation, the occurrence of insufficient regeneration of the filter 17 can be reduced, and waste of dried compressed air can also be reduced.

(2) When it is determined that the regeneration operation is insufficient, the regeneration air amount can be increased to restore the dehumidification performance of the filter 17. When it is determined that the regeneration operation is excessive, the regeneration air amount can be decreased to reduce the consumption of the dried compressed air in the air tank 30. Further, since the excess or insufficiency of the regeneration operation is determined based on the state of wetness of the dried compressed air in the air tank 30, the excess or insufficiency of the regeneration operation can be properly determined, even though the determination is indirect.

(3) A coefficient weighted based on the magnitude of the degree of excess or insufficiency of regeneration is used for calculation of the regeneration air amount. Therefore, an amount of regeneration air appropriate to the magnitude of the degree of excess or insufficiency of regeneration can be passed through the filter 17.

(4) Since the tank air moisture saturation degree $S$, which indicates the state of wetness of the dried compressed air in the air tank 30, is calculated from the humidity of the dried compressed air flowing back from the air tank 30 to the filter 17 during the regeneration operation, the state of wetness of the dried compressed air can be properly calculated.

(Second embodiment)

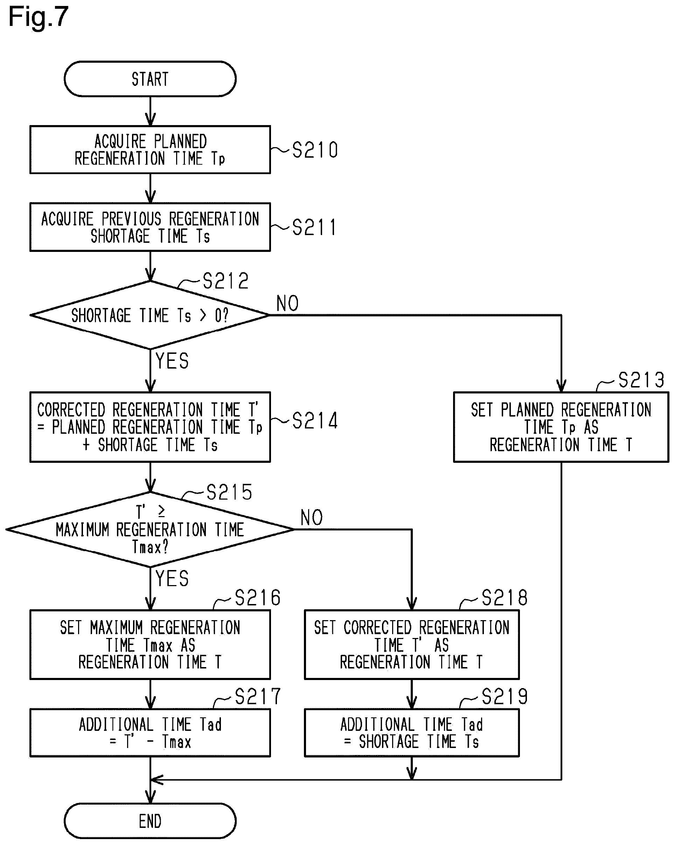

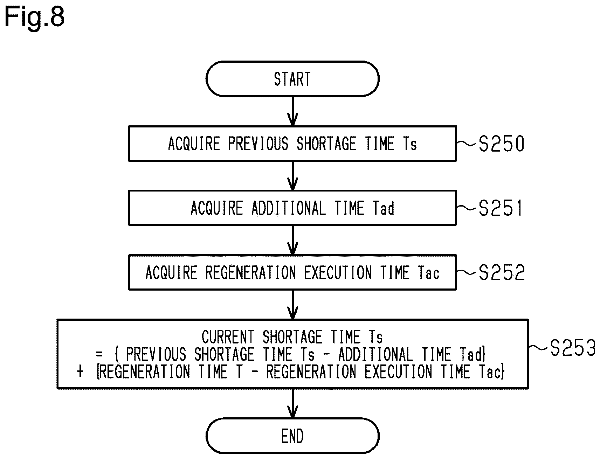

With reference to Figure 7 and Figure 8, a second embodiment will be described. The second embodiment is the same as the first embodiment in that a regeneration execution state of the air drying circuit 11, which is a state in which the regeneration operation was executed in the past, is used. While a past regeneration execution state is reflected in the regeneration air amount in the first embodiment, the second embodiment is different from the first embodiment in that a past regeneration execution state is reflected in the regeneration time. In the following, differences from the first embodiment will be mainly described in detail, and detailed description of commonalities will be omitted for the convenience of explanation.

This embodiment is based on a premise that a planned regeneration time is calculated based on the regeneration air amount calculated before the regeneration operation is executed upon the ECU 80 determining that the regeneration operation is required, and the regeneration operation is executed based on the planned regeneration time.

The regeneration operation normally ends when the elapsed time since the start of the regeneration reaches a previously determined regeneration time, but may be interrupted at another timing based on the state of the air drying circuit 11 or the vehicle. For example, the regeneration operation is interrupted at a timing when the dried compressed air is consumed by the pneumatic system forming the brake system or the like and the pressure in the air tank 30 reaches the cut-in pressure, or when an instruction is received from an ECU for controlling another system. When the ECU 80 determines that a condition for interrupting the regeneration operation is satisfied, the ECU 80 gives a higher priority to supplying dried compressed air than to the regeneration operation and interrupts the regeneration operation, and meanwhile stores the remaining regeneration time in a storage portion, such as nonvolatile storage portion or a volatile storage portion. When the next regeneration operation is started, the remaining regeneration time is added to the regeneration time calculated according to the tank contained moisture amount Mtk or the like.

With reference to Figure 7, a procedure of a regeneration time correction processing of correcting the regeneration time will be described. The regeneration time correction processing is performed before the regeneration operation is executed. In the following, a regeneration time correction processing immediately before the n-th regeneration operation ($n \geq 2$) since the start of operation of the air supply system 10 will be described.

The ECU 80 acquires a planned regeneration time Tp(n) (prescribed regeneration time (calculated value)) calculated according to the tank contained moisture amount Mtk (step S210). The planned regeneration time Tp(n) acquired in this step is a time to perform regeneration converted from the regeneration air amount calculated in step S113 in Figure 6.

The ECU 80 also acquires a shortage time Ts(n-1) of the previous regeneration operation stored in the storage portion (step S211). Here, the description will be made on an assumption that the shortage time Ts(n-1) of the previous regeneration operation is "0". That the shortage time Ts(n-1) of the previous regeneration operation is "0" means that the shortage time Ts(n-1) of the previous regeneration operation has been reset or the past regeneration operation was not interrupted, for example. The shortage time Ts(n-1) of the previous regeneration operation may be reset at a predetermined timing when a state where the air supply system 10 is at rest has continued for a predetermined time period, when maintenance of the air supply system 10 is executed, or when an ignition switch of the vehicle is turned off, for example.

When the ECU 80 determines that the shortage time Ts(n-1) of the previous regeneration operation is "0 seconds" (step S212: NO), the ECU 80 sets the planned regeneration time Tp(n) as the regeneration time T(n), and ends the processing. That is, the regeneration operation is executed by planning that the regeneration operation is executed for the planned regeneration time Tp(n). Upon starting the regeneration operation, the ECU 80 measures a regeneration execution time Tac (current state duration), which is an elapsed time since the start of the regeneration.

Suppose that the interruption condition is satisfied midway during the n-th regeneration operation, and the regeneration operation is interrupted by the ECU 80 (Tac < T(n)). When the regeneration operation is interrupted in this way, the ECU 80 performs a processing of calculating the shortage time. The processing of calculating the shortage time is also performed when the elapsed time since the start of the regeneration operation reaches the regeneration time T(n) and the regeneration operation ends as planned.

With reference to Figure 8, a shortage time calculation processing will be described. When the ECU 80 ends or interrupts the regeneration operation, the ECU 80 acquires the shortage time Ts(n-1) of the previous regeneration operation stored in the storage portion (step S250). The ECU 80 also acquires an additional time Tad (prescribed regeneration time (addition value)), which is calculated in the processing of correcting the regeneration time in the current (n-th) regeneration operation (step S251). If the shortage time Ts(n-1) of the previous regeneration operation is "0", the additional time Tad is also "0".

The ECU 80 also acquires a regeneration execution time Tac(n), which is an elapsed time since the start of the n-th regeneration operation (step S252). The ECU 80 then calculates the shortage time Ts(n) of the current (n-th) regeneration operation according to the following equation (4) by summing a first term, which is the shortage time Ts(n-1) of the previous ((n-1)-th) regeneration operation minus the additional time Tad, and a second term, which is the shortage time T(n) of the current regeneration operation minus the regeneration execution time Tac(n) (step S253).

$$Ts(n) = \{Ts(n-1) = Tad\} + \{T(n) - Tac(n)\}...(4)$$

The first term indicates whether or not the current (n-th) regeneration operation has been executed to fulfill the shortage time of the previous ((n-1)-th) and preceding regeneration operations, and is "0" if there is no shortage time of the previous regeneration operation. The second term indicates whether or not a shortage time occurs in the current (n-th) regeneration operation. Therefore, the shortage time here is calculated according to "Ts(n) = T(n) - Tac(n)". The ECU 80 stores the calculated shortage time Ts(n) in a nonvolatile storage portion or a volatile storage portion, and ends the shortage time calculation processing.

Next, suppose that the ECU 80 determines that the (n+1)-th regeneration operation is required. The ECU 80 calculates the regeneration time based on the regeneration air amount calculated based on the state of the air drying circuit 11 at that point in time, and performs the regeneration time correction processing.

As shown in Figure 7, the ECU 80 acquires the planned regeneration time Tp ((n+1)-th) planned for the current ((n+1)-th) regeneration operation (step S210). The ECU 80 also acquires the shortage time Ts(n) of the previous (n-th) regeneration operation, and determines whether or not the shortage time Ts(n) of the previous regeneration operation is greater than "0 seconds" (step S212). The previous regeneration operation (n-th) was interrupted, and the shortage time Ts(n) is greater than "0 seconds".

When the ECU 80 determines that the shortage time Ts(n) of the previous regeneration operation is greater than "0 seconds" (step S212: YES), the ECU 80 adds the shortage time Ts(n) of the previous regeneration operation to the planned regeneration time Tp(n+1) to calculate a corrected regeneration time T'(n+1) (prescribed regeneration time (effective value)) (step S213). The ECU 80 also determines whether or not the corrected regeneration time T'(n+1) is equal to or greater than a maximum regeneration time Tmax (step S214). The maximum regeneration time Tmax is an upper limit value of the regeneration time.

When the ECU 80 determines that the corrected regeneration time T'(n+1) is equal to or greater than the maximum regeneration time Tmax (step S214: YES), the ECU 80 sets the maximum regeneration time Tmax as the corrected regeneration time T'(n+1) (step S215). Further, as the time added anew to the planned regeneration time Tp(n+1), the ECU 80 sets a difference between the corrected regeneration time T'(n+1) and the maximum regeneration time Tmax in the additional time Tad (step S216). That is, a portion of the corrected regeneration time T'(n+1) that has been determined to be an overrun beyond the maximum regeneration time Tmax and dropped is the additional time Tad.

On the other hand, when the ECU 80 determines that the corrected regeneration time T'(n+1) is less than the maximum regeneration time Tmax (step S214: NO), the ECU 80 sets the corrected regeneration time T'(n+1) as the time for which the regeneration operation is to be executed. That is, the ECU 80 plans to execute the regeneration operation for the corrected regeneration time T'(n+1). The ECU 80 then sets the shortage time Ts(n) of the previous regeneration operation as the additional time Tad (step S217). Upon setting the corrected regeneration time T'(n+1) and the additional time Tad in this way, the ECU 80 ends the regeneration time correction processing, and proceeds the processing to the shortage time calculation processing. Upon starting the (n+1)-th regeneration operation, the ECU 80 measures the regeneration execution time Tac, which is the elapsed time since the start of the regeneration operation.

As shown in Figure 8, upon ending the (n+1)-th regeneration operation, the ECU 80 calculates the shortage time of the (n+1)-th regeneration operation. The ECU 80 acquires the shortage time of the previous (n-th) regeneration operation (step S250), and acquires the additional time Tad (step S251). The ECU 80 also acquires the regeneration execution time Tac(n+1) of the (n+1)-th regeneration operation (step S252). The ECU 80 then calculates the shortage time Ts(n+1) according to the equation (3) described above (step S253).

For example, if the additional time Tad set when starting the n-th regeneration operation is "0", the first term (Ts(n) - Tad) is the shortage time Ts(n) of the n-th regeneration operation interrupted. As the second term (T(n+1) - Tac(n+1)), "0" is set if the (n+1)-th regeneration operation has been not interrupted, and a value greater than "0" is set if the (n+1)-th regeneration operation has been interrupted. That is, the first term indicates the shortage time of the previous regeneration operations, and the second term indicates the shortage time that occurs in the current regeneration operation. Therefore, if a shortage time occurs not only in the previous regeneration operations but also in the current regeneration operation, the shortage time is stored and included in the regeneration time of the next regeneration operation. Therefore, the regeneration operation is performed for the stored regeneration time at a timing when a sufficient amount of dried compressed air is stored in the air tank 30 and a sufficient regeneration time can be ensured, so that the performance of the filter 17 can be properly maintained while giving a higher priority to supplying the dried compressed air to the brake system or the like.

According to the second embodiment, the following advantageous effects can be achieved.

(5) When the regeneration operation is interrupted, the remaining time of the regeneration time is stored in the storage portion, and the remaining time is reflected in the regeneration time of the next regeneration operation when the next regeneration operation is started. Therefore, the dehumidification performance of the filter 17 can be properly maintained while allowing for an interruption of the regeneration operation and giving a higher priority to consumption of the dried compressed air from the air tank 30.

(6) When the n-th regeneration operation ends, the remaining time of the (n-1)-th regeneration operation and the remaining time of the n-th regeneration operation are summed and reflected in the (n+1)-th regeneration operation. The remaining time of the (n-1)-th regeneration operation is reflected in the regeneration time of the n-th regeneration operation. If the remaining time of the (n-1)-th regeneration operation is cancelled in the n-th regeneration operation, the remaining time is not carried. If the remaining time of the (n-1)-th regeneration operation is not cancelled in the n-th regeneration operation, the remaining time is carried. If the n-th regeneration operation is not interrupted, the remaining time of the n-th regeneration operation is not carried to the (n+1)-th regeneration operation. If the n-th regeneration operation is interrupted, the remaining time of the n-th regeneration operation is carried to the (n+1)-th regeneration operation. Therefore, until the remaining time of the past regeneration operations is canceled, the remaining time is carried. Therefore, the dehumidification performance of the filter 17 can be properly maintained.

The embodiments described above can be modified and implemented as follows. These embodiments and the following modifications can be implemented in combination with each other within a range in which no technical contradiction occurs.

- In the first embodiment, the regeneration air amount is determined based on the degree of excess or insufficiency of regeneration. However, the regeneration time may be determined based on the degree of excess or insufficiency of regeneration. In the latter case, the corrected regeneration time is calculated by multiplying a corrected unit time by the excess-or-insufficiency coefficient, and the corrected regeneration time is added to the standard regeneration time.
- In the first embodiment, the excess-or-insufficiency coefficient $\alpha$ is calculated by multiplying the degree of excess or insufficiency of regeneration by a weighting factor. However, the degree of excess or insufficiency of regeneration itself may be used as the excess-or-insufficiency coefficient $\alpha$. In the latter case, again, the regeneration air amount can be increased and decreased according to the excess or insufficiency of regeneration.
- In the first embodiment, the degree of excess or insufficiency of regeneration is defined as an indicator that indicates whether the moisture saturation degree contained in the dried compressed air in the air tank 30 is increasing or decreasing. However, the humidity may be used as an indicator, instead of the degree of excess or insufficiency of regeneration. Alternatively, the tank contained moisture amount Mtk may be used as an indicator, instead of the degree of excess or insufficiency of regeneration.
- The degree of excess or insufficiency of regeneration in the first embodiment may be an average value between several cycles. If the average value is a negative value, it is estimated that the amount of moisture in the air tank 30 is increasing, and therefore, it is determined that the regeneration air amount is insufficient.
- In the first embodiment, the regeneration result stored each time a regeneration operation ends is used as the tank air moisture saturation degree. However, other indicators may be used. For example, other indicators, such as the humidity of the dried compressed air or the tank contained moisture amount Mtk, may be used.
- In the second embodiment, when setting the regeneration time T, the shortage time Ts of the past regeneration operation is added to the reference regeneration time. Alternatively, a portion of the shortage time Ts of the past regeneration operation may be added to the reference regeneration time. Alternatively, the shortage time Ts of the past regeneration operation may be corrected and added to the reference regeneration time.
- In the second embodiment, when the remaining time of the (n-1)-th regeneration operation is not cancelled in the n-th regeneration operation, the remaining time is reflected in the regeneration time of the next (n+1)-th regeneration operation. As an alternative to this form, when the remaining time of the (n-1)-th regeneration operation is not cancelled, a portion of the remaining time may be reflected in the regeneration time of the (n+1)-th regeneration operation, or the remaining time of the (n-1)-th regeneration operation may be reflected in the regeneration time of the n-th regeneration operation but not reflected in the regeneration time of the (n+1)-th regeneration operation.
- In the second embodiment, the regeneration result stored each time a regeneration operation ends is the remaining time of the regeneration operation. However, other regeneration results may be stored. For example, the regeneration result may be the regeneration air amount.
- In the second embodiment, the regeneration time is calculated based on the regeneration air amount calculated in the first embodiment, and the regeneration operation is executed using the regeneration time. However, the regeneration time is not limited thereto. For example, the regeneration time may be calculated based on the amount of the compressed air sent from the compressor 4 or may be calculated based on the humidity detected by the humidity sensor 51 when the air drying circuit 11 is in the regeneration operation or the dehumidification operation. Alternatively, the regeneration time may be calculated based on the interval between executions of the regeneration operation. When the regeneration time is calculated based on the compressed air amount, the regeneration time is calculated to be short in a state where the compressed air amount in a time period is small, and is calculated to be long in a state where the compressed air amount is large. When the regeneration time is calculated based on the humidity, the regeneration time is calculated to be short in a state where the humidity is low, and is calculated to be long in a state where the humidity is high. When the regeneration time is calculated based on the interval between executions of the regeneration operation, the regeneration time is calculated to be short when the execution interval is short, and is calculated to be long when the execution interval is long. Alternatively, the regeneration time may be constant regardless of the contained moisture amount or the moisture saturation degree in the air tank 30.
- In the embodiments described above, the filter 17 includes an oil trap portion. However, the oil trap portion may be omitted from the filter 17.
- The air drying circuit is not limited to the configuration described above. In short, the air drying circuit can have any configuration capable of executing the dehumidification operation and the regeneration operation. In other words, the air drying circuit is not a circuit for which the second operation mode, and the fourth operation mode to the sixth operation mode are essential operations.

- In the embodiments described above, the air supply system 10 is described as being installed in a vehicle such as a truck, a bus, or a construction machine. As a form other than this, the air supply system 10 may be installed in another moving body such as a passenger car or a railway vehicle.
- The ECU 80 is not limited to a control unit that performs all the processes to be executed by it based on software processing. For example, the ECU 80 may include a dedicated hardware circuit (for example, an application specific integrated circuit (ASIC)) that performs hardware processing for at least a part of the processing to be executed by the ECU 80. That is, the ECU 80 may be configured as circuitry including 1) one or more processors operating according to computer programs (software), 2) one or more dedicated hardware circuits for executing at least some processing among various types of processing, or 3) a combination of the processor(s) and the dedicated hardware circuit(s). The processor includes a CPU and memories such as a RAM and a ROM, and the memories store program codes or instructions that are configured to cause the CPU to execute processing. The memories, that is, computer-readable media, include any available media that are accessible by general-purpose or dedicated computers.

DESCRIPTION OF THE REFERENCE NUMERALS

4...compressor, 10...air supply system, 11...airdrying circuit, 12...supply circuit, 15...upstream check valve, 16...branch passage, 17...filter, 18...airsupply passage, 19...downstream check valve, 20...bypass channel, 21...regeneration control valve, 22...orifice, 25...drainage discharge valve, 26A...governor, 26B...unloading control valve, 27...drainage discharge port as a discharge port, 30...air tank as reservoir portion, 50...pressure sensor, 51...humidity sensor, 52...temperature sensor, 53...pressure sensor, 80...ECU, 80A...storage portion, E61 to E67...wiring.

**Claims**

1. An air supply system (10), comprising:

   an air drying circuit (11) provided between a compressor (4) for sending compressed air and a reservoir portion (30) for storing dried compressed air, the air drying circuit (11) having a filter (17) for trapping moisture; and
   a control device (80) for controlling the air drying circuit (11),
   wherein the control device (80) is configured to:

      control the air drying circuit (11) to execute a dehumidification operation of passing the compressed air sent from the compressor (4) through the filter (17) in a forward direction to supply the compressed air to the reservoir portion (30);
      control the air drying circuit (11) to execute a regeneration operation of passing the dried compressed air stored in the reservoir portion (30) through the filter (17) in a reverse direction to discharge, from a discharge port (27), a fluid having passed through the filter (17);
      **characterized in that** said control device (80) is further configured to :

         store a regeneration result, which is a result of the regeneration operation of the air drying circuit (11), in a storage portion (80A) each time the regeneration operation ends;
         acquire the regeneration result of the air drying circuit (11) stored in the storage portion (80A) when starting anew the regeneration operation;
         reflect the acquired regeneration result in a regeneration condition of the regeneration operation to be started anew, the regeneration condition including a regeneration air amount, which is an amount of air passing through the filter in the regeneration operation, or a regeneration time, which is a time for which the regeneration operation is executed,
         determine whether the regeneration operation is excess or insufficient based on an indicator that indicates a state of wetness of the dried compressed air in the reservoir portion (30);
         increase the regeneration air amount, when it is determined that the regeneration operation is insufficient; and
         decrease the regeneration air amount or the regeneration time when it is determined that the regeneration operation is excessive.

2. The air supply system according to claim 1, wherein the control device (80) is configured to:

calculate a degree of excess or insufficiency, which indicates an excess or insufficiency of the regeneration operation; and

calculate the regeneration air amount by adding, to a reference air amount, a value obtained by multiplying the degree of excess or insufficiency by a coefficient weighted according to a magnitude of the excess or insufficiency of the regeneration operation.

3. The air supply system according to claim 1 or 2, wherein the air drying circuit (11) includes a humidity detection portion (51) between the filter (17) and the reservoir portion (30), and

the control device (80) is configured to calculate the indicator that indicates the state of wetness of the dried compressed air based on humidity information detected by the humidity detection portion in the regeneration operation.

4. The air supply system according to any one of claims 1 to 3, wherein the control device (80) is configured to:

set the regeneration time for which the regeneration operation is executed before starting the regeneration operation;

store a remaining time of the regeneration time in the storage portion when the regeneration operation is interrupted; and

when starting anew the regeneration operation, acquire the remaining time from the storage portion and reflect the remaining time in the regeneration time of the regeneration operation started anew.

5. The air supply system according to claim 4, wherein when the regeneration operation ends, the control device (80) calculates a corrected remaining time by summing the remaining time of the regeneration operation and a remaining time of a regeneration operation executed before the regeneration operation, and reflects the corrected remaining time in the regeneration time of a subsequent regeneration operation.

6. The air supply system according to any one of claims 1 to 5, wherein the regeneration result includes one or more of: a moisture saturation degree contained in the dried compressed air in the reservoir portion, an amount of moisture contained in the dried compressed air in the reservoir portion, the remaining time of the regeneration time, and the regeneration air amount.

7. A control method for an air supply system (10) that comprises:

an air drying circuit (11) provided between a compressor (4) for sending compressed air and a reservoir portion (30) for storing dried compressed air, the air drying circuit (11) having a filter (17) for trapping moisture; and

a control device (80) for controlling the air drying circuit (11), the method comprising, by the control device (80):

controlling the air drying circuit (11) to execute a dehumidification operation of passing the compressed air sent from the compressor (4) through the filter (17) in a forward direction to supply the compressed air to the reservoir portion (30);

controlling the air drying circuit (11) to execute a regeneration operation of passing the dried compressed air stored in the reservoir portion (30) through the filter (17) in a reverse direction to discharge, from a discharge port (27), a fluid having passed through the filter (17);

further **characterized by** :

storing a regeneration result, which is a result of the regeneration operation of the air drying circuit (11), in a storage portion (80A) each time the regeneration operation ends;

acquiring the regeneration result of the air drying circuit (11) stored in the storage portion when starting anew the regeneration operation;

reflecting the acquired regeneration result in a regeneration condition of the regeneration operation to be started anew, the regeneration condition including a regeneration air amount, which is an amount of air passing through the filter in the regeneration operation, or a regeneration time, which is a time for which the regeneration operation is executed;

determining whether the regeneration operation is excess or insufficient based on an indicator that indicates a state of wetness of the dried compressed air in the reservoir portion;

increasing the regeneration air amount, which is the amount of air passing through the filter in the regeneration operation, or the regeneration time, which is the time for which the regeneration operation is executed, when it is determined that the regeneration operation is insufficient; and

decreasing the regeneration air amount or the regeneration time when it is determined that the regeneration operation is excessive.

8. A control program for an air supply system (10) comprising:

an air drying circuit (11) provided between a compressor (4) for sending compressed air and a reservoir portion (30) for storing dried compressed air, the air drying circuit (11) having a filter (17) for trapping moisture; and a control device (80) for controlling the air drying circuit (11), wherein the control program makes the control device (80) function as:

a dehumidification operation execution portion for controlling the air drying circuit (11) to execute a dehumidification operation of passing the compressed air sent from the compressor (4) through the filter (17) in a forward direction to supply the compressed air to the reservoir portion (30); a regeneration operation execution portion for controlling the air drying circuit (11) to execute a regeneration operation of passing the dried compressed air stored in the reservoir portion (30) through the filter (17) in a reverse direction to discharge, from a discharge port (27), a fluid having passed through the filter (17); **characterized in that** said control program makes further the control device (80) function as :

a result storing portion for storing a regeneration result, which is a result of the regeneration operation of the air drying circuit (11), in a storage portion (80A) each time the regeneration operation ends; an acquisition portion for acquiring the regeneration result of the air drying circuit (11) stored in the storage portion when starting anew the regeneration operation; a reflection portion for reflecting the acquired regeneration result in a regeneration condition of the regeneration operation to be started anew, the regeneration condition including a regeneration air amount, which is an amount of air passing through the filter in the regeneration operation, or a regeneration time, which is a time for which the regeneration operation is executed; and a determination portion for determining whether the regeneration operation is excess or insufficient based on an indicator that indicates a state of wetness of the dried compressed air in the reservoir portion, increasing the regeneration air amount, which is the amount of air passing through the filter in the regeneration operation, or the regeneration time, which is the time for which the regeneration operation is executed, when it is determined that the regeneration operation is insufficient, and decreasing the regeneration air amount or the regeneration time when it is determined that the regeneration operation is excessive.

## Patentansprüche

1. Luftversorgungssystem (10), umfassend:

einen Lufttrocknungskreislauf (11), der zwischen einem Kompressor (4) zum Zuführen von Druckluft und einem Aufbewahrungsabschnitt (30) zum Aufbewahren von getrockneter Druckluft vorgesehen ist, wobei der Lufttrocknungskreislauf (11) einen Filter (17) zum Einfangen von Feuchtigkeit aufweist; und eine Steuereinheit (80) zur Steuerung des Lufttrocknungskreislaufs (11), wobei die Steuereinheit (80) konfiguriert ist zum:

Steuern des Lufttrocknungskreislaufs (11), um einen Entfeuchtungsvorgang auszuführen, bei dem die von dem Kompressor (4) gesendete Druckluft durch den Filter (17) in einer Vorwärtsrichtung geleitet wird, um die Druckluft dem Aufbewahrungsabschnitt (30) zuzuführen; Steuern des Lufttrocknungskreislaufs (11), um einen Regenerationsvorgang auszuführen, bei dem die getrocknete Druckluft, die in dem Aufbewahrungsabschnitt (30) aufbewahrt wird, in umgekehrter Richtung durch den Filter (17) geleitet wird, um ein Fluid, das den Filter (17) durchlaufen hat, aus einer Auslassöffnung (27) auszulassen; **dadurch gekennzeichnet, dass** die Steuereinheit (80) ferner konfiguriert ist zum:

Aufbewahren eines Regenerationsergebnisses, das ein Ergebnis des Regenerationsvorgangs des Lufttrocknungskreislaufs (11) ist, in einem Speicherabschnitt (80A) jedes Mal, wenn der Regenerationsvorgang endet; Erfassen des Regenerationsergebnisses des Lufttrocknungskreislaufs (11), das in dem Speicherabschnitt (80A) gespeichert ist, wenn der Regenerationsvorgang erneut gestartet wird;

Wiedergeben des erfassten Regenerationsergebnisses in einer Regenerationsbedingung des neu zu startenden Regenerationsvorgangs, wobei die Regenerationsbedingung eine Regenerationsluftmenge, die eine Menge an Luft ist, die den Filter in dem Regenerationsvorgang durchläuft, oder eine Regenerationszeit, die eine Zeit ist, in der der Regenerationsvorgang ausgeführt wird, umfasst, auf der Grundlage eines Indikators, der einen Feuchtigkeitszustand der getrockneten Druckluft in dem Aufbewahrungsabschnitt (30) anzeigt, Bestimmen, ob der Regenerationsvorgang überschritten oder unterschritten wurde;

Erhöhen der Regenerationsluftmenge, wenn bestimmt wird, dass der Regenerationsvorgang unterschritten wurde; und

Verringern der Regenerationsluftmenge oder der Regenerationszeit, wenn bestimmt wird, dass der Regenerationsvorgang überschritten wurde.

2. Luftversorgungssystem gemäß Anspruch 1, wobei die Steuereinheit (80) konfiguriert ist, um:

einen Grad der Überschreitung oder Unterschreitung zu berechnen, der eine Überschreitung oder Unterschreitung des Regenerationsvorgangs anzeigt; und

die Regenerationsluftmenge zu berechnen, indem zu einer Referenzluftmenge ein Wert addiert wird, der durch Multiplikation des Grades der Überschreitung oder Unterschreitung mit einem Koeffizienten erhalten wird, der gemäß einer Größe der Überschreitung oder Unterschreitung des Regenerationsvorgangs gewichtet ist.

3. Luftversorgungssystem gemäß Anspruch 1 oder 2, wobei der Lufttrocknungskreislauf (11) einen Feuchtigkeitserfassungsabschnitt (51) zwischen dem Filter (17) und dem Aufbewahrungsabschnitt (30) aufweist, und die Steuereinheit (80) so konfiguriert ist, dass sie den Indikator, der den Feuchtezustand der getrockneten Druckluft anzeigt, auf der Grundlage von Feuchtigkeitsinformationen berechnet, die von dem Feuchteerfassungsabschnitt im Regenerationsvorgang erfasst werden.

4. Luftversorgungssystem gemäß einem der Ansprüche 1 bis 3, wobei die Steuereinheit (80) ausgebildet ist, um:

die Regenerationszeit zur Ausführung des Regenerationsvorgangs einzustellen, bevor der Regenerationsvorgang gestartet wird;

eine Restzeit der Regenerationszeit in dem Speicherabschnitt zu speichern, wenn der Regenerationsvorgang unterbrochen wird; und

beim erneuten Starten des Regenerationsvorgangs die verbleibende Zeit aus dem Speicherabschnitt zu entnehmen und die verbleibende Zeit in der Regenerationszeit des neu gestarteten Regenerationsvorgangs wiederzugeben.

5. Luftversorgungssystem gemäß Anspruch 4, wobei die Steuereinheit (80) bei Beendigung des Regenerationsvorgangs eine korrigierte Restzeit berechnet, indem sie die Restzeit des Regenerationsvorgangs und eine Restzeit eines vor dem Regenerationsvorgang ausgeführten Regenerationsvorgangs addiert, und die korrigierte Restzeit in die Regenerationszeit eines nachfolgenden Regenerationsvorgangs einbezieht.

6. Luftversorgungssystem gemäß einem der Ansprüche 1 bis 5, wobei das Regenerationsergebnis eines oder mehrere der folgenden Merkmale umfasst: einen Feuchtigkeitssättigungsgrad, der in der getrockneten Druckluft in dem Aufbewahrungsabschnitt enthalten ist, eine Feuchtigkeitsmenge, die in der getrockneten Druckluft in dem Aufbewahrungsabschnitt enthalten ist, die Restzeit der Regenerationszeit und die Regenerationsluftmenge.

7. Steuerverfahren für ein Luftversorgungssystem (10), umfassend:

einen Lufttrocknungskreislauf (11), der zwischen einem Kompressor (4) zum Zuführen von Druckluft und einem Aufbewahrungsabschnitt (30) zum Aufbewahren von getrockneter Druckluft vorgesehen ist, wobei der Lufttrocknungskreislauf (11) einen Filter (17) zum Einfangen von Feuchtigkeit aufweist; und

eine Steuereinheit (80) zum Steuern des Lufttrocknungskreislaufs (11), wobei das Verfahren durch die Steuereinheit (80) umfasst:

Steuern des Lufttrocknungskreislaufs (11), um einen Entfeuchtungsvorgang auszuführen, bei dem die von dem Kompressor (4) gesendete Druckluft durch den Filter (17) in einer Vorwärtsrichtung geleitet wird, um die Druckluft zu dem Aufbewahrungsabschnitt (30) zuzuführen;

Steuern des Lufttrocknungskreislaufs (11), um einen Regenerationsvorgang auszuführen, bei dem die getrocknete Druckluft, die in dem Aufbewahrungsabschnitt (30) gespeichert ist, in umgekehrter Richtung durch den Filter (17) geleitet wird, um ein Fluid, das den Filter (17) passiert hat, aus einer Auslassöffnung (27) auszugeben;
ferner **gekennzeichnet durch:**

Speichern eines Regenerationsergebnisses, das ein Ergebnis des Regenerationsvorgangs des Lufttrocknungskreislaufs (11) ist, in einem Speicherabschnitt (80A) jedes Mal, wenn der Regenerationsvorgang endet;
Erfassen des Regenerationsergebnisses des Lufttrocknungskreislaufs (11), das in dem Speicherabschnitt gespeichert ist, wenn der Regenerationsvorgang erneut gestartet wird;
Wiedergeben des erfassten Regenerationsergebnisses in einer Regenerationsbedingung des neu zu startenden Regenerationsvorgangs, wobei die Regenerationsbedingung eine Regenerationsluftmenge, die eine Luftmenge ist, die den Filter in dem Regenerationsvorgang durchläuft, oder eine Regenerationszeit, die eine Zeit ist, in der der Regenerationsvorgang ausgeführt wird, umfasst;
Bestimmen, ob der Regenerationsvorgang überschritten oder unterschritte wurde, auf der Grundlage eines Indikators, der einen Feuchtigkeitszustand der getrockneten Druckluft in dem Aufbewahrungsabschnitt anzeigt;
Erhöhen der Regenerationsluftmenge, die die Luftmenge ist, die bei dem Regenerationsvorgang den Filter durchläuft, oder der Regenerationszeit, die die Zeit ist, in der der Regenerationsvorgang ausgeführt wird, wenn bestimmt wird, dass der Regenerationsvorgang unterschritten wurde; und
Verringern der Regenerationsluftmenge oder der Regenerationszeit, wenn bestimmt wird, dass der Regenerationsvorgang überschritten wurde.

8. Steuerprogramm für ein Luftzufuhrsystem (10), umfassend:

einen Lufttrocknungskreislauf (11), der zwischen einem Kompressor (4) zum Zuführen von Druckluft und einem Aufbewahrungsabschnitt (30) zum Aufbewahren von getrockneter Druckluft vorgesehen ist, wobei der Lufttrocknungskreislauf (11) einen Filter (17) zum Einfangen von Feuchtigkeit aufweist; und
eine Steuereinheit (80) zur Steuerung des Lufttrocknungskreislaufs (11),
wobei das Steuerprogramm die Steuereinheit (80) veranlasst, zu funktionieren als:

ein Entfeuchtungsvorgang-Ausführungsabschnitt zum Steuern des Lufttrocknungskreislaufs (11), um einen Entfeuchtungsvorgang auszuführen, bei dem die von dem Kompressor (4) zugeführte Druckluft durch den Filter (17) in einer Vorwärtsrichtung geleitet wird, um die Druckluft dem Aufbewahrungsabschnitt (30) zuzuführen;
ein Regenerationsvorgang-Ausführungsabschnitt zum Steuern des Lufttrocknungskreislaufs (11), um einen Regenerationsvorgang auszuführen, bei dem die getrocknete Druckluft, die in dem Aufbewahrungsabschnitt (30) aufbewahrt wird, in umgekehrter Richtung durch den Filter (17) geleitet wird, um ein Fluid, das den Filter (17) durchlaufen hat, aus einer Auslassöffnung (27) auszugeben;
**dadurch gekennzeichnet, dass** das Steuerprogramm die Steuereinheit (80) ferner veranlasst, zu funktionieren als:

ein Ergebnisspeicherabschnitt zum Speichenr eines Regenerationsergebnisses, das ein Ergebnis des Regenerationsvorgangs des Lufttrocknungskreislaufs (11) ist, in einem Speicherabschnitt (80A) jedes Mal, wenn der Regenerationsvorgang endet;
ein Erfassungsabschnitt zum Erfassen des Regenerationsergebnisses des Lufttrocknungskreislaufs (11), das in dem Speicherabschnitt gespeichert ist, wenn der Regenerationsvorgang erneut gestartet wird;
ein Wiedergabeabschnitt zum Wiedergeben des erfassten Regenerationsergebnisses in einer Regenerationsbedingung des erneut zu startenden Regenerationsvorgangs, wobei die Regenerationsbedingung eine Regenerationsluftmenge, die eine Menge an Luft ist, die den Filter in dem Regenerationsvorgang durchläuft, oder eine Regenerationszeit, die eine Zeit ist, in der der Regenerationsvorgang ausgeführt wird, umfasst; und
ein Bestimmungsabschnitt zum Bestimmen, ob der Regenerationsvorgang überschritten oder unterschritten wurde, auf der Grundlage eines Indikators, der einen Feuchtigkeitszustand der getrockneten Druckluft in dem Aufbewahrungsabschnitt anzeigt, zum Erhöhen der Regenerationsluftmenge, die die Luftmenge ist, die den Filter in dem Regenerationsvorgang durchläuft, oder der Regenerationszeit, die die Zeit ist, in der der Regenerationsvorgang ausgeführt wird, wenn bestimmt wird, dass der Regene-

# EP 3 932 758 B1

rationsvorgang unterschritten wurde, und zum Verringern der Regenerationsluftmenge oder der Regenerationszeit, wenn bestimmt wird, dass der Regenerationsvorgang überschritten wurde.

## Revendications

1. Système d'alimentation en air (10), comprenant :

   un circuit de séchage de l'air (11) prévu entre un compresseur (4) pour envoyer de l'air comprimé et une partie réservoir (30) pour stocker l'air comprimé séché, le circuit de séchage de l'air (11) ayant un filtre (17) pour piéger l'humidité ; et
   un dispositif de commande (80) pour commander le circuit de séchage de l'air (11),
   dans lequel le dispositif de commande (80) est configuré pour :

   commander le circuit de séchage de l'air (11) pour exécuter une opération de déshumidification consistant à faire passer l'air comprimé envoyé par le compresseur (4) à travers le filtre (17) dans une direction vers l'avant pour fournir l'air comprimé à la partie réservoir (30) ;
   commander le circuit de séchage de l'air (11) pour exécuter une opération de régénération consistant à faire passer l'air comprimé séché stocké dans la partie réservoir (30) à travers le filtre (17) dans un sens inverse pour évacuer, à partir d'un orifice de décharge (27), un fluide ayant traversé le filtre (17) ;

   **caractérisé en ce que** ledit dispositif de commande (80) est en outre configuré pour :

   stocker un résultat de régénération, qui est un résultat de l'opération de régénération du circuit de séchage de l'air (11), dans une partie de stockage (80A) chaque fois que l'opération de régénération se termine ;
   acquérir le résultat de régénération du circuit de séchage de l'air (11) stocké dans la partie de stockage (80A) lors du redémarrage de l'opération de régénération ;
   refléter le résultat de régénération acquis dans une condition de régénération de l'opération de régénération à redémarrer, la condition de régénération incluant une quantité d'air de régénération, qui est une quantité d'air passant à travers le filtre dans l'opération de régénération, ou un temps de régénération, qui est un temps pendant lequel l'opération de régénération est exécutée,
   déterminer si l'opération de régénération est excessive ou insuffisante sur la base d'un indicateur qui indique l'état d'humidité de l'air comprimé séché dans la partie réservoir (30) ;
   augmenter la quantité d'air de régénération, lorsqu'il est déterminé que l'opération de régénération est insuffisante ; et
   diminuer la quantité d'air de régénération ou la durée de régénération lorsqu'il est déterminé que l'opération de régénération est excessive.

2. Système d'alimentation en air selon la revendication 1, dans lequel le dispositif de commande (80) est configuré pour :

   calculer un degré d'excès ou d'insuffisance, qui indique un excès ou une insuffisance de l'opération de régénération ; et
   calculer la quantité d'air de régénération en ajoutant, à une quantité d'air de référence, une valeur obtenue en multipliant le degré d'excès ou d'insuffisance par un coefficient pondéré selon une ampleur de l'excès ou de l'insuffisance de l'opération de régénération.

3. Système d'alimentation en air selon la revendication 1 ou 2, dans lequel le circuit de séchage de l'air (11) inclut une partie de détection d'humidité (51) entre le filtre (17) et la partie réservoir (30), et
   le dispositif de commande (80) est configuré pour calculer l'indicateur qui indique l'état d'humidité de l'air comprimé séché sur la base des informations d'humidité détectées par la partie de détection d'humidité dans l'opération de régénération.

4. Système d'alimentation en air selon l'une quelconque des revendications 1 à 3, dans lequel le dispositif de commande (80) est configuré pour :

   définir le temps de régénération pour lequel l'opération de régénération est exécutée avant de commencer l'opération de régénération ;
   stocker une durée restante de la durée de régénération dans la partie de stockage lorsque l'opération de régénération est interrompue ; et

lors du redémarrage de l'opération de régénération, acquérir le temps restant dans la partie de stockage et refléter le temps restant dans le temps de régénération de l'opération de régénération redémarrée.

5. Système d'alimentation en air selon la revendication 4, dans lequel, lorsque l'opération de régénération se termine, le dispositif de commande (80) calcule un temps restant corrigé en additionnant le temps restant de l'opération de régénération et un temps restant d'une opération de régénération exécutée avant l'opération de régénération, et reflète le temps restant corrigé dans le temps de régénération d'une opération de régénération ultérieure.

6. Système d'alimentation en air selon l'une quelconque des revendications 1 à 5, dans lequel le résultat de régénération inclut un ou plusieurs des éléments suivants : un degré de saturation de l'humidité contenue dans l'air comprimé séché dans la partie réservoir, une quantité d'humidité contenue dans l'air comprimé séché dans la partie réservoir, le temps restant du temps de régénération, et la quantité d'air de régénération.

7. Procédé de commande d'un système d'alimentation en air (10) qui comprend :

un circuit de séchage de l'air (11) prévu entre un compresseur (4) pour envoyer de l'air comprimé et une partie réservoir (30) pour stocker l'air comprimé séché, le circuit de séchage de l'air (11) ayant un filtre (17) pour piéger l'humidité ; et

un dispositif de commande (80) pour commander le circuit de séchage de l'air (11), le procédé comprenant, par le dispositif de commande (80) :

commander le circuit de séchage de l'air (11) pour exécuter une opération de déshumidification consistant à faire passer l'air comprimé envoyé par le compresseur (4) à travers le filtre (17) dans une direction vers l'avant pour fournir l'air comprimé à la partie réservoir (30) ;

commander le circuit de séchage de l'air (11) pour exécuter une opération de régénération consistant à faire passer l'air comprimé séché stocké dans la partie réservoir (30) à travers le filtre (17) dans un sens inverse pour évacuer, à partir d'un orifice de décharge (27), un fluide ayant traversé le filtre (17) ;

**caractérisé en outre par** :

stocker un résultat de régénération, qui est un résultat de l'opération de régénération du circuit de séchage de l'air (11), dans une partie de stockage (80A) chaque fois que l'opération de régénération se termine ;

acquérir le résultat de régénération du circuit de séchage de l'air (11) stocké dans la partie de stockage lors du redémarrage de l'opération de régénération ;

refléter le résultat de régénération acquis dans une condition de régénération de l'opération de régénération à recommencer, la condition de régénération incluant une quantité d'air de régénération, qui est une quantité d'air passant à travers le filtre dans l'opération de régénération, ou un temps de régénération, qui est un temps pendant lequel l'opération de régénération est exécutée ;

déterminer si l'opération de régénération est excessive ou insuffisante sur la base d'un indicateur qui indique l'état d'humidité de l'air comprimé séché dans la partie réservoir ;

augmenter la quantité d'air de régénération, qui est la quantité d'air passant à travers le filtre lors de l'opération de régénération, ou la durée de régénération, qui est la durée pendant laquelle l'opération de régénération est exécutée, lorsqu'il est déterminé que l'opération de régénération est insuffisante ; et

diminuer la quantité d'air de régénération ou le temps de régénération lorsqu'il est déterminé que l'opération de régénération est excessive.

8. Programme de commande d'un système d'alimentation en air (10) comprenant :

un circuit de séchage de l'air (11) prévu entre un compresseur (4) pour envoyer de l'air comprimé et une partie réservoir (30) pour stocker l'air comprimé séché, le circuit de séchage de l'air (11) ayant un filtre (17) pour piéger l'humidité ; et

un dispositif de commande (80) pour commander le circuit de séchage de l'air (11),

dans lequel le programme de commande fait fonctionner le dispositif de commande (80) comme :

une partie d'exécution d'opération de déshumidification pour commander le circuit de séchage de l'air (11) pour exécuter une opération de déshumidification consistant à faire passer l'air comprimé envoyé par le compresseur (4) à travers le filtre (17) dans une direction vers l'avant pour fournir l'air comprimé à la partie réservoir (30) ;
une partie d'exécution de l'opération de régénération pour commander le circuit de séchage de l'air (11) pour exécuter une opération de régénération consistant à faire passer l'air comprimé séché stocké dans la partie réservoir (30) à travers le filtre (17) dans un sens inverse pour évacuer, à partir d'un orifice de décharge (27), un fluide ayant traversé le filtre (17) ;

**caractérisé en ce que** ledit programme de commande fait en outre fonctionner le dispositif de commande (80) comme :

une partie de stockage des résultats pour stocker un résultat de régénération, qui est un résultat de l'opération de régénération du circuit de séchage de l'air (11), dans une partie de stockage (80A) chaque fois que l'opération de régénération se termine ;
une partie d'acquisition pour acquérir le résultat de régénération du circuit de séchage de l'air (11) stocké dans la partie de stockage lors du redémarrage de l'opération de régénération ; une partie de réflexion pour refléter le résultat de régénération acquis dans une condition de régénération de l'opération de régénération à redémarrer, la condition de régénération incluant une quantité d'air de régénération, qui est une quantité d'air passant à travers le filtre dans l'opération de régénération, ou un temps de régénération, qui est un temps pendant lequel l'opération de régénération est exécutée ; et
une partie de détermination pour déterminer si l'opération de régénération est excessive ou insuffisante sur la base d'un indicateur qui indique l'état d'humidité de l'air comprimé séché dans la partie réservoir, en augmentant la quantité d'air de régénération, qui est la quantité d'air passant à travers le filtre dans l'opération de régénération, ou le temps de régénération, qui est le temps pendant lequel l'opération de régénération est exécutée, lorsqu'il est déterminé que l'opération de régénération est insuffisante, et en diminuant la quantité d'air de régénération ou le temps de régénération lorsqu'il est déterminé que l'opération de régénération est excessive.

Fig.1

EP 3 932 758 B1

## Fig.2A

COMPRESSOR 4:                     ON
REGENERATION CONTROL VALVE 21:CLOSE
GOVERNOR 26A:                    CLOSE
UNLOADING CONTROL VALVE 26B:   CLOSE

## Fig.2B

COMPRESSOR 4:                     OFF
REGENERATION CONTROL VALVE 21:CLOSE
GOVERNOR 26A:                     OPEN
UNLOADING CONTROL VALVE 26B:   OPEN

## Fig.2C

COMPRESSOR 4:                     OFF
REGENERATION CONTROL VALVE 21:OPEN
GOVERNOR 26A:                     OPEN
UNLOADING CONTROL VALVE 26B:   OPEN

## Fig.2D

COMPRESSOR 4:                     ON
REGENERATION CONTROL VALVE 21:CLOSE
GOVERNOR 26A:               OPEN→CLOSE
UNLOADING CONTROL VALVE 26B:   CLOSE

## Fig.2E

COMPRESSOR 4:                     OFF
REGENERATION CONTROL VALVE 21:CLOSE
GOVERNOR 26A:                    CLOSE
UNLOADING CONTROL VALVE 26B:   OPEN

## Fig.2F

COMPRESSOR 4:                     OFF
REGENERATION CONTROL VALVE 21:OPEN
GOVERNOR 26A:                    CLOSE
UNLOADING CONTROL VALVE 26B:   OPEN

## Fig.3

| 100 | 101 | 102 | 103 |
|---|---|---|---|
| EXCESS-OR-INSUFFICIENCY CONDITION | STATE | EXCESS-OR-INSUFFICIENCY COEFFICIENT α | |
| DEGREE OF EXCESS OR INSUFFICIENCY ≤-1.0 | SUBSTANTIALLY INSUFFICIENT | DEGREE OF EXCESS OR INSUFFICIENCY x2 | |
| -1.0< DEGREE OF EXCESS OR INSUFFICIENCY <-0.5 | INSUFFICIENT | DEGREE OF EXCESS OR INSUFFICIENCY x1 | |
| -0.5≤ DEGREE OF EXCESS OR INSUFFICIENCY <0.5 | OPTIMUM | 0 | |
| 0.5≤ DEGREE OF EXCESS OR INSUFFICIENCY <1.0 | EXCESSIVE | DEGREE OF EXCESS OR INSUFFICIENCY x1 | |
| 1.0≤ DEGREE OF EXCESS OR INSUFFICIENCY | SUBSTANTIALLY EXCESSIVE | DEGREE OF EXCESS OR INSUFFICIENCY x2 | |

## Fig.4

START

AIR SUPPLY PROCESS (1st Operation) ~S1

STOP SUPPLY? ~S2 — NO

YES

CLEARANCE PROCESS ~S3

NO-AIR SUPPLY PROCESS ~S4

END? ~S5 — NO

YES

END

Fig.5

```
        ┌──────────────┐
        │    START     │
        └──────┬───────┘
               │  ⌐S100
          ╱────┴────╲              NO
        ╱ REGENERATION ╲──────────────┐
        ╲  REQUIRED?  ╱                │
          ╲────┬────╱                  │
             YES│                       │
        ┌───────┴──────────────┐        │
        │ ACQUIRE REGENERATION │ ⌐S101  │
        │      AIR AMOUNT      │        │
        └───────┬──────────────┘        │
        ┌───────┴──────────────┐        │
        │ REGENERATION OPERATION│⌐S102  │
        │    (3rd Operation)   │        │
        └───────┬──────────────┘        │
               │◄───────────────────────┘
        ┌──────┴───────┐
        │     END      │
        └──────────────┘
```

Fig.6

```
        ┌──────────────┐
        │    START     │
        └──────┬───────┘
               │  ⌐S110
          ╱────┴────╲              NO
        ╱  UPDATE?   ╲──────────────┐
          ╲────┬────╱                │
             YES│                     │
        ┌───────┴──────────────┐      │
        │ CALCULATE DEGREE OF  │⌐S111 │
        │ EXCESS OR DEFICIENCY │      │
        │   OF REGENERATION    │      │
        └───────┬──────────────┘      │
        ┌───────┴──────────────┐      │
        │ ACQUIRE REGENERATION │⌐S112 │
        │ EXCESS-OR-INSUFFICIENCY│    │
        │     COEFFICIENT      │      │
        └───────┬──────────────┘      │
        ┌───────┴──────────────┐      │
        │ CALCULATE REGENERATION│⌐S113│
        │      AIR AMOUNT      │      │
        └───────┬──────────────┘      │
               │◄─────────────────────┘
        ┌──────┴───────┐
        │     END      │
        └──────────────┘
```

# Fig.7

START

ACQUIRE PLANNED
REGENERATION TIME Tp — S210

ACQUIRE PREVIOUS REGENERATION
SHORTAGE TIME Ts — S211

S212
SHORTAGE TIME Ts > 0? — NO → SET PLANNED REGENERATION
TIME Tp AS
REGENERATION TIME T — S213

YES

CORRECTED REGENERATION TIME T'
= PLANNED REGENERATION TIME Tp
+ SHORTAGE TIME Ts — S214

S215
T' ≥
MAXIMUM REGENERATION TIME
Tmax? — NO → SET CORRECTED REGENERATION
TIME T' AS
REGENERATION TIME T — S218

YES

SET MAXIMUM REGENERATION
TIME Tmax AS
REGENERATION TIME T — S216

ADDITIONAL TIME Tad
= T' − Tmax — S217

ADDITIONAL TIME Tad
= SHORTAGE TIME Ts — S219

END

# Fig.8

```
                    ┌─────────────┐
                    │    START    │
                    └──────┬──────┘
                           │
                           ▼
        ┌──────────────────────────────────────┐
        │  ACQUIRE PREVIOUS SHORTAGE TIME Ts    │───S250
        └──────────────────┬───────────────────┘
                           │
                           ▼
        ┌──────────────────────────────────────┐
        │     ACQUIRE ADDITIONAL TIME Tad       │───S251
        └──────────────────┬───────────────────┘
                           │
                           ▼
        ┌──────────────────────────────────────┐
        │  ACQUIRE REGENERATION EXECUTION TIME Tac │───S252
        └──────────────────┬───────────────────┘
                           │
                           ▼
```

CURRENT SHORTAGE TIME Ts
= { PREVIOUS SHORTAGE TIME Ts - ADDITIONAL TIME Tad}
+ {REGENERATION TIME T - REGENERATION EXECUTION TIME Tac}                    ───S253

```
                    ┌─────────────┐
                    │     END     │
                    └─────────────┘
```

28

**EP 3 932 758 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010201323 A
- JP 2010221110 A